# EUROPÄISCHE PATENTSCHRIFT

(11) **EP 2 251 397 B1**
(45) Veröffentlichungstag und Bekanntmachung des Hinweises auf die Patenterteilung: **28.11.2012**
(21) Anmeldenummer: 10009521.5
(22) Anmeldetag: 14.03.2003
(51) Int. Cl.: C09K 19/42, C09K 19/44

(54) **Flüssigkristallmedium und dieses enthaltende elektro-optische Anzeige**
Liquid crystalline medium and electrooptical display containing it
Milieu liquide cristallin et dispositif d'affichage électro-optique le contenant

(30) Priorität: 12.04.2002 DE 10216197
(43) Veröffentlichungstag der Anmeldung: 17.11.2010
(62) Teilanmeldung aus: 07014056.1
(73) Patentinhaber: Merck Patent GmbH, 64293 Darmstadt (DE)
(72) Erfinder: Klasen-Memmer, Melanie, Dr., 67259 Heuchelheim (DE); Bremer, Matthias, Dr., 64295 Darmstadt (DE); Rillich, Malgorzata, 64291 Darmstadt (DE)

(56) Entgegenhaltungen:
- EP-A- 0 949 232
- EP-A- 1 081 123
- EP-A- 1 146 104
- EP-A- 1 179 522
- WO-A-01/79379
- WO-A-02/46329
- DE-A1- 10 107 544
- DE-A1- 10 158 081
- GB-A- 2 290 787
- GB-A- 2 300 642
- US-A- 5 378 395
- US-A- 6 017 469

## Beschreibung

Die vorliegende Erfindung betrifft Flüssigkristallanzeigen besonders mittels einer aktiven Matrix angesteuerte Flüssigkristallanzeigen (AMDs oder AMLCDs nach Englisch Active Matrix addressed Liquid Crystal Displays) und zwar insbesondere solche, die eine aktive Matrix aus Dünnfilmtransistoren (TFT nach Englisch Thin Film Transistors) oder aus Varistoren verwenden. Außerdem betrifft die vorliegende Anmeldung Flüssigkristallmedien zur Anwendung in solchen Anzeigen. Solche AMDs können verschiedene aktive elektronische Schaltelemente verwenden. Am weitesten verbreitet sind solche Anzeigen, die drei-polige Schaltelemente verwenden. Diese sind auch in der vorliegenden Erfindung bevorzugt. Beispiele für derartige drei-polige Schaltelemente sind MOS (Metal Oxide Silicon) Transistoren oder die bereits erwähnten TFTs oder Varistoren. Bei den TFTs werden verschiedene Halbleitermaterialien, überwiegend Silizium oder auch Cadmiurnselenid, verwendet. Insbesondere wird polykristallines Silizium oder amorphes Silizium verwendet. Im Gegensatz zu den drei-poligen elektronischen Schaltelementen können in AMDs auch Matrizen aus 2-poligen Schaltelementen wie z.B. MIM (Metall Insulator Metal) Dioden, Ringdioden oder "Back to back"-Dioden eingesetzt werden. Diese sind jedoch, wie auch unten näher erläutert, wegen der schlechteren erzielten elektrooptischen Eigenschaften der AMDs, in der Regel, nicht bevorzugt.

In derartigen Flüssigkristallanzeigen werden die Flüssigkristalle als Dielektrika verwendet, deren optische Eigenschaften sich bei Anlegen einer elekbrischen Spannung reversibel ändern. Elektrooptische Anzeigen, die Flüsslgknstalle als Medien verwenden sind dem Fachmann bekannt. Diese Flüssigkristallanzeigen verwenden verschiedene elektrooptische Effekte.

Die am weitesten verbreiteten konventionellen Anzeigen verwenden den TN-Effekt (Twisted nematic, mit einer um ca. 90° verdrillten nematischen Struktur), den STN-Effekt (Supertwisted nematic) oder den SBE-Effekt (Supertwisted birefringence effect). Bei diesen und ähnlichen elektrooptischen Effekten werden flüssigkristalline Medien mit positiver dielektrischer Anisotropie (Δε) verwendet.

Da bei Anzeigen im allgemeinen, also auch bei Anzeigen nach diesen Effekten, die Betriebsspannung möglichst gering sein soll, werden Flüssigkristallmedien mit großer dielektrischer Anisotropie eingesetzt, die in der Regel überwiegend aus dielektrisch positiven Flüssigkristallverbindungen zusammengesetzt sind und allenfalls kleinere/geringere Anteile an dielektrisch neutralen Verbindungen enthalten.

Im Gegensatz zu den genannten konventionellen Anzeigen, die die genannten elektrooptischen Effekte benutzen, welche Flüssigkristalimedien mit positiver dielektrischer Anisotropie benötigen, gibt es andere elektrooptische Effekte, welche Flüssigkristallmedien mit negativer dielektrischer Anisotropie verwenden, wie z.B. der ECB-Effekt (Electrically Controlled Birefringence) und seine Unterformen DAP (Deformation of Aligned Phases), VAN (Vertically Aligned Nematics) und CSH (Color Super Homeotropics). Diese sind der bevorzugte Gegenstand der vorliegenden Anmeldung.

Der in letzter Zeit verstärkt eingesetzte IPS-Effekt (In Plane Switching) kann sowohl dielektrisch positive wie auch dielektrisch negative Flüssigkristallmedien verwenden, ähnlich wie auch "guest/host" also Gast/Wirt-Anzeigen, die Farbstoffe, je nach verwandtem Anzelgemodus, entweder In dielektrisch positiven oder in dielektrisch negativen Medien einsetzen können. Auch bei den in diesem Absatz genannten Flüssigkristallanzeigen sind die, die dielektrisch negative Flüssigkristallmedien verwenden, Gegenstand der vorliegenden Anmeldung.

Eine weitere vielversprechende Art von Flüssigkristallanzeigen sind sogenannte "Axially Symmetric Microdomain"- (kurz ASM) Anzeigen die bevorzugt mittels Plasmaarrays angesteuert werden (PA LCDs von "Plasma Addressed Liquid Crystal Displays"). Auch diese Anzeigen sind Gegenstand der vorliegenden Anmeldung.

Die in den, die obengenannten und alle ähnlichen Effekte ausnutzenden Flüssigkristallanzeigen, eingesetzten Flüssigkristallmedien, bestehen in der Regel überwiegend und meist sogar weitestgehend aus Flüssigkristallverbindungen mit der entsprechenden dielektrischen Anisotropie, also bei dielektrisch positiven Medien aus Verbindungen mit positiver dielektrischer Anisotropie und bei dielektrisch negativen Medien aus Verbindungen mit negativer dielektrischer Anisotropie. In diesem Zusammenhang sind entsprechende Medien aus GB 2 300 642 A1, DE 101 07 544 A1, US 5,378,395 A1, EP 1 081 123 A1, EP 1 179 522 A1, EP 0 949 232 A1, GB 2 290 787 A1, WO 01/79 379 A1, US 6,017,469 A1 aus dem Stand der Technik bekannt.

Bei den gemäß der vorliegenden Anmeldung verwendeten Medien werden typischerweise allenfalls nennenswerte Mengen an dielektrisch neutralen Flüssigkristallverbindungen in der Regel von ca. 20%, manchmal auch mehr und, in der Regel nur sehr geringe Mengen oder gar keine dielektrisch positiven Verbindungen eingesetzt, da generell die Flüssigkristallanzeigen möglichst niedrige Ansteuerspannungen haben sollen. Aus diesem Grund werden Flüssigkristallverbindungen mit dem der dielektrischen Anisotropie des Mediums entgegengesetzten Vorzeichen der dielektrischen Anisotropie in der Regel äußerst sparsam oder gar nicht eingesetzt.

Die Flüssigkristallmedien des Standes der Technik haben relativ niedrige Doppelbrechungen, relativ hohe Betriebsspannungen (die Schwellenspannungen (V₀) sind oft relativ hoch, teilweise größer als 2,2 V) und relativ große Schaltzeiten, die insbesondere für videofähige Anzeigen nicht ausreichend sind. Des weiteren sind sie meist nicht für hohe Betriebstemperaturen geeignet und/oder haben unzureichende Tieftemperaturstabilitäten. So reichen die nematischen Phasen oft nur hinab bis -20 °C und teilweise sogar nur bis -10 °C.

Zum größten Teil weisen die Flüssigkristallmedien des Standes der Technik relativ ungünstige Werte für Δn auf, die oft deutlich kleiner sind als 0,11 und teilweise kleiner als 0,10 sind. Derartig kleine Δn-Werte sind jedoch für VAN-Anzeigen nicht besonders vorteilhaft, da sie die Verwendung von Zellen mit relativ großen Schichtdicken, von 4 µm oder mehr, erfordern und somit zu für viele Anwendungen nicht akzeptablen großen Schaltzeiten führen. So wird beispielsweise etwa ein d·Δn von ungefähr 0,30 µm bei unverdrillter Direktororientierung oder ein d·Δn von ungefähr 0,40 µm mit 90° Verdrillung eingesetzt.

Die Verwendung von Zellen mit sehr kleinen Schichtdicken führt jedoch häufig zu geringen Produktionsausbeuten bei den Anzeigen.

Am günstigsten für schnell schaltende Anzeigen sind meist Δn-Werte der verwendeten Flüssigkristallmedien im Bereich von 0,105 bis 0,15. Dies gilt auch für IPS-Anzeigen.

Außerdem sind die Schaltzeiten der Anzeigen des Standes der Technik oft zu groß. Somit müssen die Viskositäten der Flüssigkristallmedien verbessert, also verringert werden. Dies gilt besonders für die Rotationsviskosität und ganz besonders für deren Wert bei niedrigen Temperaturen. Eine Verringerung der Fließviskosität führt insbesondere bei Anzeigen mit homeotroper Randorientierung der Flüssigkristalle (z. B. bei ECB- und VAN-Anzeigen) in der Regel zu einer sehr erwünschten Verkürzung der Füllzeiten bei der Herstellung der Anzeigen.

Zum Beispiel sind aus der EP 1146 104 sind Flüssigkristallmedien für VAN-Anzeigen bekannt, die Verbindungen der Formel 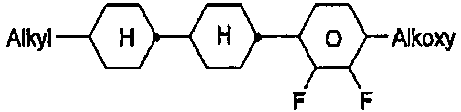 enthalten. Diese Medien haben Jedoch relativ niedrige Werte der Doppelbrechung und gleichzeitig relativ große Werte der Rotationsviskosität. Dadurch führen sie in den Anzeigen zu relativ langen Schaltzeiten.

Aus GB 23 00 642 sind Flüssigkristallmedien mit negativer dielektrischer Anisotropie bekannt, die terminal polar substituierte Terphenyle enthalten. Diese Medien haben jedoch nur geringe Absolutwerte der dielektrischen Anisotropie. Und obwohl sie einen weiten Bereich von Werten der Doppelbrechung abdecken, haben sie durchgängig vergleichsweise hohe Viskositäten, insbesonders hohe Rotationsviskositäten und führen so zu unvorteilhaften Schaltzeiten.

Somit bestand und besteht ein großer Bedarf an Flüssigkristallmedien, die die Nachteile der Medien aus dem Stand der Technik nicht, oder zumindest in deutlich vermindertem Umfang, aufweisen.

Überraschend wurde gefunden, daß dies durch die erfindungsgemäßen Flüssigkristallmedien erreicht wird. Diese Medien enthalten
a) eine dielektrisch negative, flüssigkristalline Komponente (Komponente A), die eine oder mehrere dielektrisch negative Verbindung(en) der Formel I enthält 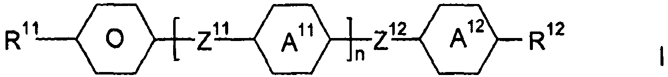 worin
   - R¹¹: Alkyl mit 1 bis 7 C-Atomen, bevorzugt n-Alkyl, besonders bevorzugt n-Alkyl mit 1 bis 5 C-Atomen, Alkoxy mit 1 bis 7 C-Atomen, bevorzugt n-Alkoxy, besonders bevorzugt n-Alkoxy mit 1 bis 5 C-Atomen oder Alkoxyalkyl, Alkenyl oder Alkenyloxy mit 2 bis 7 C-Atomen, bevorzugt mit 2 bis 4 C-Atomen, bevorzugt Alkenyloxy,
   - R¹²: Alkyl oder Alkoxy mit 1 bis 7 C-Atomen, bevorzugt Alkoxy, bevorzugt n-Alkoxy und besonders bevorzugt n-Alkoxy mit 2 bis 5 C-Atomen oder Alkoxyalkyl, Alkenyl oder Alkenyloxy mit 2 bis 7 C-Atomen, bevorzugt mit 2 bis 4 C-Atomen, bevorzugt Alkenyloxy, 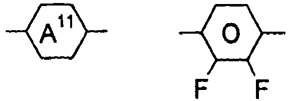 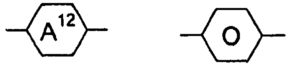
   - Z¹¹ und Z¹²: eine Einfachbindung
   - n: 1
   und
b) eine dielektrisch negative, flüssigkristalline Komponente (Komponente B), die bevorzugt eine oder mehrere dielektrisch negative Verbindung(en) ausgewählt aus der Gruppe der Verbindungen der Formeln II und III enthält 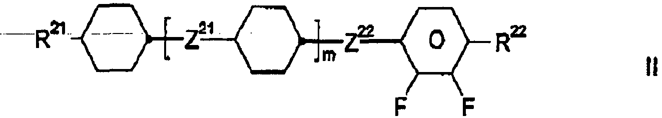 worin
   - R²¹: Alkyl mit 1 bis 7 C-Atomen, bevorzugt n-Alkyl und besonders bevorzugt n-Alkyl mit 1 bis 5 C-Atomen, Alkoxy mit 1 bis 7 C-Atomen, bevorzugt n-Alkoxy und besonders bevorzugt n-Alkoxy mit 2 bis 5 C-Atomen, oder Alkoxyalkyl, Alkenyl oder Alkenyloxy mit 2 bis 7 C-Atomen, bevorzugt mit 2 bis 4 C-Atomen, bevorzugt Alkenyloxy,
   - R²²: Alkyl mit 1 bis 7 C-Atomen, bevorzugt Alkyl, besonders bevorzugt n-Alkyl mit 1 bis 3 C-Atomen, Alkoxy mit 1 bis 7 C-Atomen, bevorzugt n-Alkoxy, besonders bevorzugt n-Alkoxy mit 2 bis 5 C-Atomen oder Alkoxyalkyl, Alkenyl oder Alkenyloxy mit 2 bis 7 C-Atomen, bevorzugt Alkenyloxy, bevorzugt mit 2 bis 4 Atomen,
   - Z²¹ und Z²²: jeweils unabhängig voneinander, -CH₂-CH₂-, -CH=CH-, -CF=CF-, -CF=CH-, -CH=CF-, -C'--C-, -COO-, -CF₂-CF₂-, -CF₂-CH₂-, -CH₂-CF₂-, -CH₂-O-, -O-CH₂-, -CF₂-O-, -O-CF₂-, oder eine Einfachbindung, bevorzugt -CH₂-CH₂- oder eine Einfachbindung und besonders bevorzugt eine Einfachbindung,
   - m: 0 oder 1, 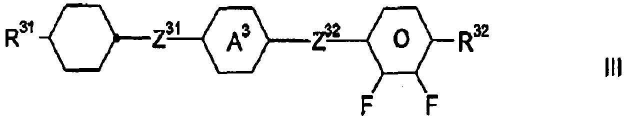 worin
   - Z³: -CH₂-CH₂-, -CH=CH-, -C≡C-, -COO- oder eine Einfachbindung, bevorzugt -CH₂-CH₂- oder eine Einfachbindung und besonders bevorzugt eine Einfachbindung,
   - R³¹ und R³²: jeweils unabhängig voneinander, Alkyl mit 1 bis 7 C-Atomen, bevorzugt n-Alkyl und besonders bevorzugt n-Alkyl mit 1 bis 5 C-Atomen, Alkoxy mit 1 bis 7 C-Atomen, bevorzugt n-Alkoxy und besonders bevorzugt n-Alkoxy mit 2 bis 5 C-Atomen oder Alkenyloxy mit 2 bis 7 C-Atomen, bevorzugt mit 2 bis 4 C-Atomen und 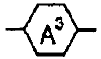 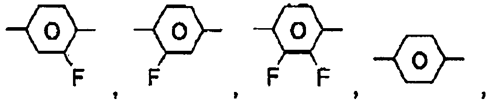 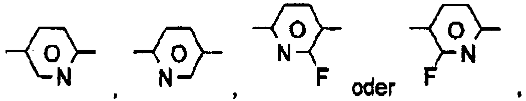 bevorzugt 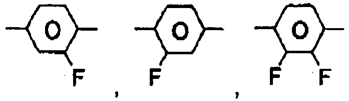 oder 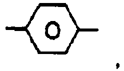 bevorzugt 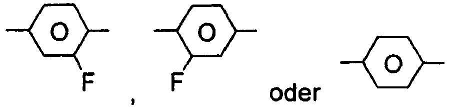 und
   - Z³¹ und Z³²: , jeweils unabhängig voneinander, -CH₂-CH₂-, -CH=CH-, -CF=CF-, -CF=CH-, -CH=CF-, -C≡C-, -COO-, -CF₂-CF₂-, -CF₂-CH₂-, -CH₂-CF₂-, -CH₂-O-, -O-CH₂-, -CF₂-O-, -O-CF₂-, oder eine Einfachbindung, bevorzugt -CH₂-CH₂- oder eine Einfachbindung und besonders bevorzugt eine Einfachbindung,
   bedeuten und eine oder mehrere dielektrisch negative Verbindungen, ausgewählt aus der Gruppe der Verbindungen der Formeln I-1a und I-1a-i bis I-1a-iii 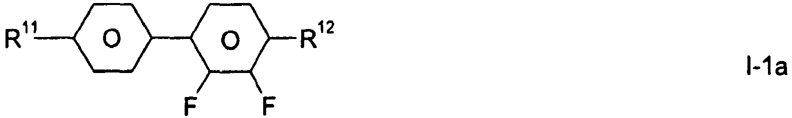 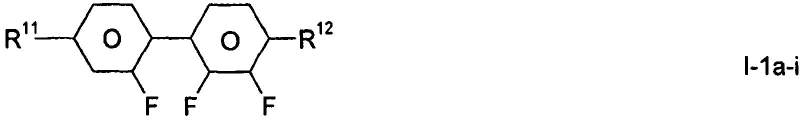 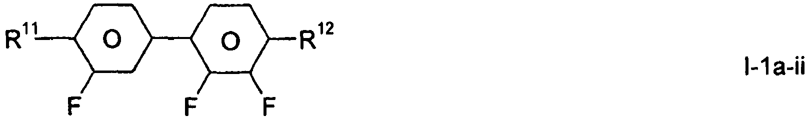 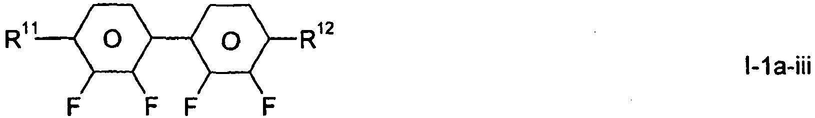 worin R¹¹ und R¹² die oben bei Formel I gegebene Bedeutung besitzen und optional
c) eine dielektrisch neutrale Komponente (Komponente C), die eine oder mehrere dielektrisch neutrale Verbindung(en) der Formel IV enthält 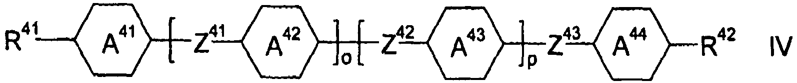 worin
   - R⁴¹ und R⁴²: , jeweils unabhängig voneinander, die oben bei Formel II für R²¹ gegebene Bedeutung besitzen,
   - Z⁴¹, Z⁴² und Z⁴³,: jeweils unabhängig voneinander, -CH₂CH₂-, -CH=CH-, -COO- oder eine Einfachbindung, 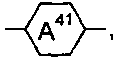 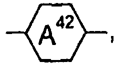 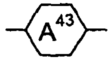 und 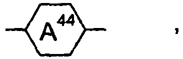 jeweils unabhängig voneinander, 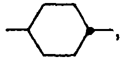 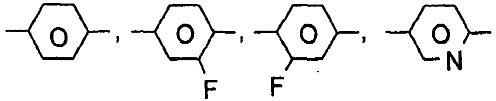 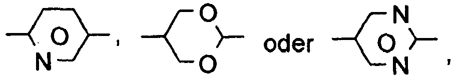
   - o: 0 oder 1, und
   - p: 0
   bevorzugt jedoch
   - R⁴¹ und R⁴²: , jeweils unabhängig voneinander, Alkyl oder Alkoxy mit 1-5 C-Atomen oder Alkenyl mit 2-5 C-Atomen, 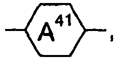 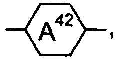 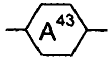 und 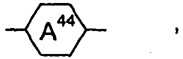 jeweils unabhängig voneinander, 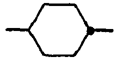 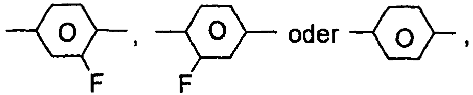
   und ganz besonders bevorzugt mindestens zwei dieser Ringe 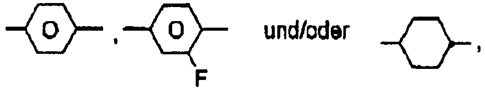 wobei ganz besonders bevorzugt zwei benachbarte Ringe direkt Verknüpft sind und zwar bevorzugt 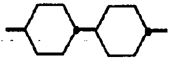 oder 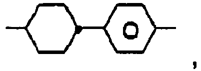 bedeuten und optional
d) eine oder mehrere dielektrisch positive Verbindung(en) der Formel V 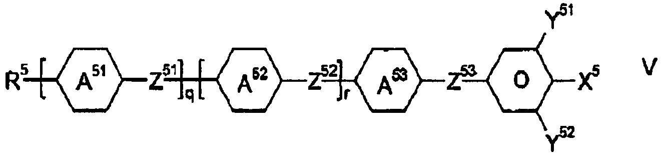 worin
   - R⁵: Alkyl und Alkoxy mit 1 bis 7 C-Atomen, Alkoxyalkyl, Alkenyl oder Alkenyloxy mit 2 bis 7 C-Atomen,
   - Z⁵¹, Z⁵² und Z⁵³: jeweils unabhängig voneinander, -CH₂-CH₂-, -CH=CH-, -C≡C-, -COO- oder eine Einfachbindung, 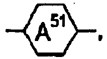 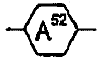 und 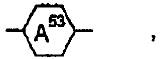 jeweils unabhängig voneinander, 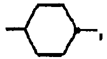 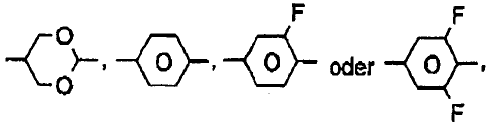
   - X⁵: F, OCF₂H oder OCF₃,
   - Y⁶¹ und Y⁵²,: jeweils unabhängig voneinander, H oder F, Y⁵¹ bevorzugt F und insbesondere im Falle X⁵ = F oder OCF₂H Y⁵² bevorzugt F und
   - q und r: , jeweils unabhängig voneinander, 0 oder 1
bedeuten.

In einer weiteren bevorzugten Ausführungsform enthält das Medium eine oder mehrere dielektrisch negative Verbindungen der Formel VI 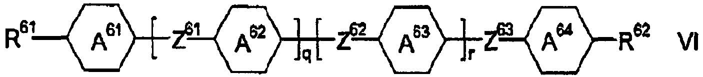 worin
- R⁶¹ und R⁶²,: jeweils unabhängig voneinander, die oben bei Formel II für R²¹ gegebene Bedeutung besitzen,
- Z⁶¹, Z⁶² und Z⁶³: jeweils unabhängig voneinander, -CH₂CH₂-, -CH=CH-, -COO- oder eine Einfachbindung,
mindestens einer der vorhandenen 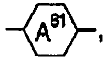 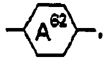 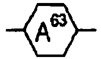 und 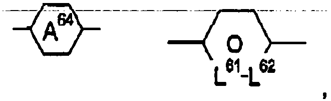 worin mindestens einer von
- L⁶¹ und L⁶²: N und der andere N oder C-F bedeutet und die anderen 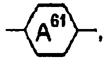 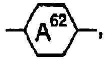 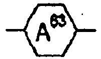 und 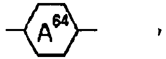 jeweils unabhängig voneinander, 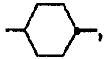 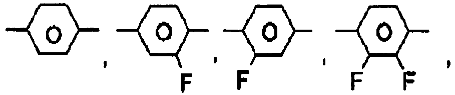 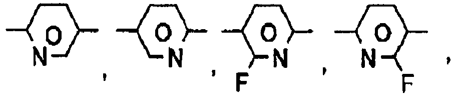 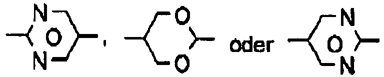 und
- q und r: , jeweils unabhängig voneinander, 0 oder 1
bevorzugt jedoch
- R⁶¹ und R⁶²: , jeweils unabhängig voneinander, Alkyl oder Alkoxy mit 1-5 Atomen oder Alkenyl mit 2-5 C-Atomen, 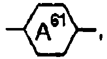 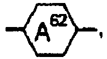 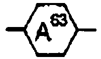 und 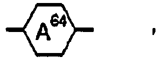 bis auf den mindestens einen, der 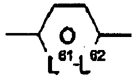 bedeutet, jeweils unabhängig voneinander, 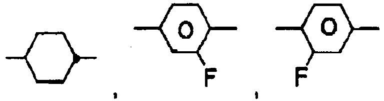 oder 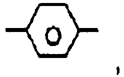 und ganz besonders bevorzugt mindestens zwei dieser Ringe 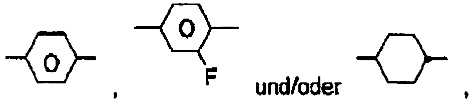
- Z⁶¹, Z⁶² und Z⁶³,: jeweils unabhängig voneinander, -CH₂CH₂- oder eine Einfachbindung, bevorzugt eine Einfachbindung
bedeuten.

In einer weiteren bevorzugten Ausführungsform enthält das Medium eine oder mehrere dielektrisch negative Verbindungen der Formel VII 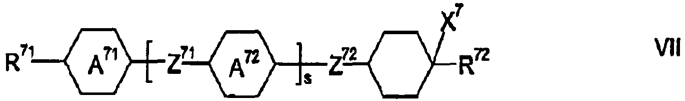 worin
- R⁷¹ und R⁷²: Alkyl mit 1 bis 7 C-Atomen, bevorzugt n-Alkyl und besonders bevorzugt n-Alkyl mit 1 bis 5 C-Atomen, Alkoxy mit 1 bis 7 C-Atomen, bevorzugt n-Alkoxy und besonders bevorzugt n-Alkoxy mit 2 bis 5 C-Atomen oder Alkenyloxy mit 2 bis 7 C-Atomen, bevorzugt mit 2 bis 4 C-Atomen, ganz besonders bevorzugt beide n-Alkoxy mit 1 bis 5 C-Atomen und
- X⁷: F, Cl, CN oder NCS, bevorzugt F oder CN, besonders bevorzugt CN, 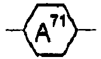 und 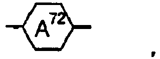 jeweils unabhängig voneinander, 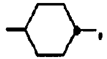 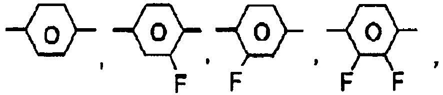 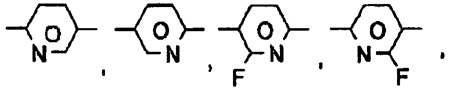 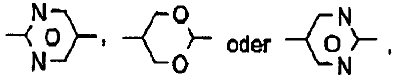 bevorzugt 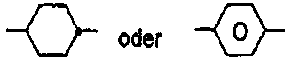 und
- s: 0 oder 1
bedeuten.

Bevorzugt besteht die Komponente A überwiegend, besonders bevorzugt im wesentlichen vollständig und ganz besonders bevorzugt nahezu vollständig, aus einer oder mehreren Verbindungen der Formel I.

In der vorliegenden Anmeldung bedeutet im Zusammenhang mit der Angabe der Bestandteile der Zusammensetzungen:
- enthalten: die Konzentration der betreffenden Bestandteile in der Zusammensetzung beträgt bevorzugt 5% oder mehr besonders bevorzugt 10% oder mehr und ganz besonders bevorzugt 20% oder mehr,
- überwiegend bestehen aus: die Konzentration der betreffenden Bestandteile in der Zusammensetzung beträgt bevorzugt 50% oder mehr, besonders bevorzugt 55% oder mehr und ganz besonders bevorzugt 60% oder mehr,
- im wesentlichen vollständig bestehen aus: die Konzentration der betreffenden Bestandteile in der Zusammensetzung beträgt bevorzugt 80% oder mehr, besonders bevorzugt 90% oder mehr und ganz besonders bevorzugt 95% oder mehr und
- nahezu vollständig bestehen aus: die Konzentration der betreffenden Bestandteile in der Zusammensetzung beträgt bevorzugt 98% oder mehr, besonders bevorzugt 99% oder mehr und ganz besonders bevorzugt 100.0%.

Dies gilt sowohl für die Medien als Zusammensetzungen mit ihren Bestandteilen, die Komponenten und Verbindungen sein können, als auch für die Komponenten mit ihren Bestandteilen, den der Verbindungen.

Bevorzugt besteht die Komponente B überwiegend, besonders bevorzugt im wesentlichen vollständig und ganz besonders bevorzugt nahezu vollständig, aus einer oder mehreren Verbindungen ausgewählt aus der Gruppe der Verbindungen der Formeln II und III.

Die Verbindungen der Formel II werden bevorzugt ausgewählt aus der Gruppe der Verbindungen der Formeln II-1 bis II-5, bevorzugt II-1 bis II-3 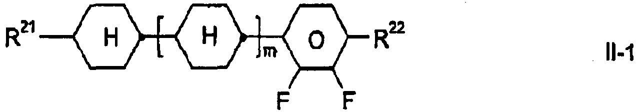 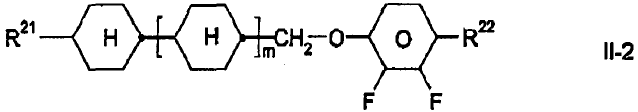 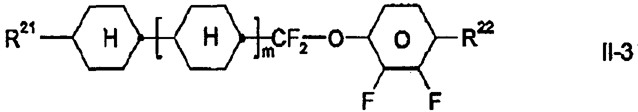 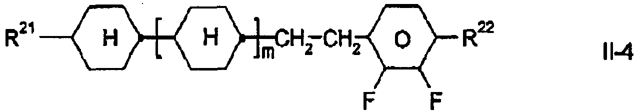 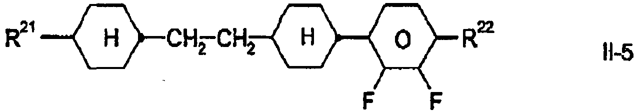 worin
- R²¹ und R²²: die oben unter Formel II gegebene Bedeutung haben und bevorzugt
- R²¹: n-Alkyl mit 1 bis 7 C-Atomen, n-Alkoxy mit 1 bis 7 C-Atomen oder Alkenyloxy mit 2 bis 7 C-Atomen,
- R²²: n-Alkoxy mit 1 bis 7 C-Atomen oder Alkenyloxy mit 2 bis 7 C-Atomen, und in Formeln I-1 und I-2 auch n-Alkyl mit 1 bis 7 C-Atomen
- m: 0 oder 1
bedeuten.

Die Verbindungen der Formel III werden bevorzugt ausgewählt aus der Gruppe der Verbindungen der Formeln III-1 bis III-6b, bevorzugt III-1 bis III-4, besonders bevorzugt III-1, III-4a und III-4b 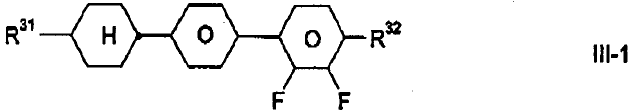 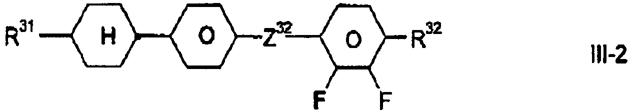 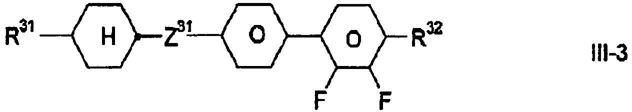 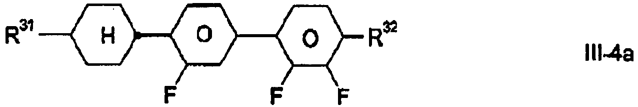 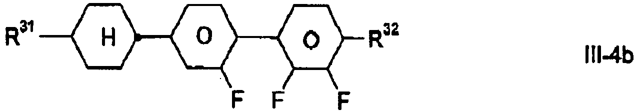 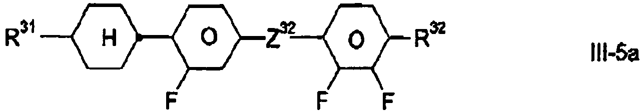 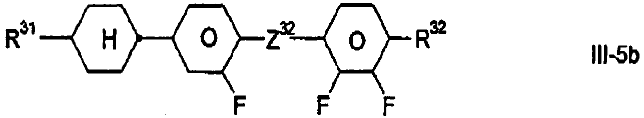 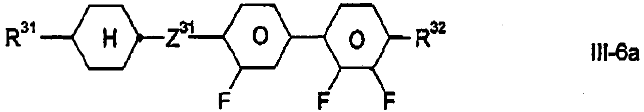 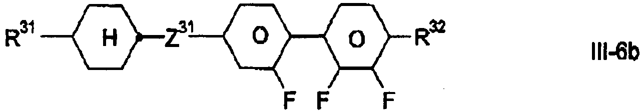 worin
- R³¹, R³², Z³¹ und Z³²: die oben unter Formel III gegebene Bedeutung haben und bevorzugt
- R³¹: n-Alkyl mit 1 bis 7 C-Atomen, n-Alkoxy mit 1 bis 7 C-Atomen oder Alkenyloxy mit 2 bis 7 Atomen,
- R³²: n-Alkoxy mit 1 bis 7 C-Atomen oder Alkenyloxy mit 2 bis 7 C-Atomen, und in Formeln 12 und 13 auch n-Alkyl mit 1 bis 7 C-Atomen und
- Z³¹ und Z³²,: jeweils voneinander unabhängig, -CH₂-CH₂-, -CH₂-O-, -CF₂-O- oder -O-CF₂-
bedeuten.

Die Verbindungen der Formel VII werden bevorzugt ausgewählt aus der Gruppe der Verbindungen der Formeln VII-1 und VII-2 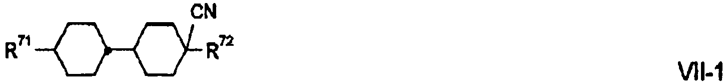 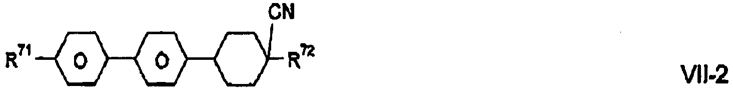 worin
- R⁷¹ und R⁷²: die oben unter Formel VII gegebene Bedeutung besitzen und bevorzugt n-Alkyl bedeuten.

Besonders bevorzugt enthalten die Flüssigkristallmedien eine oder mehrere Verbindungen ausgewählt aus der Gruppe der Verbindungen der Formeln II-1a bis II-1c, besonders bevorzugt der Formeln II-1a und II-1c 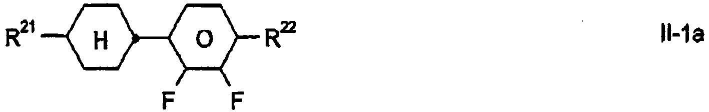 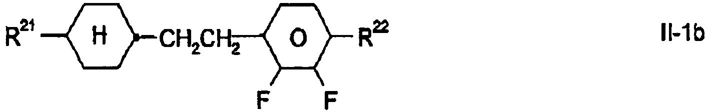 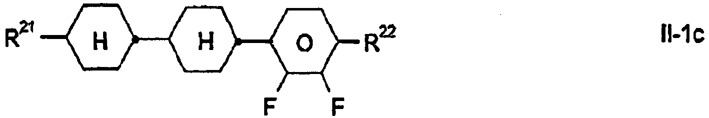 worin R²¹ und R²² die oben bei Formel II gegebene und bevorzugt die oben bei Formel II-1 gegebene Bedeutung besitzen.

Besonders bevorzugt enthalten die Flüssigkristallmedien eine oder mehrere Verbindungen der Formel III ausgewählt aus der Gruppe der Verbindungen der Formeln III-1a, III-3a, III-4a und III-6a, bevorzugt III-1a und III-4a, besonders bevorzugt III-1a 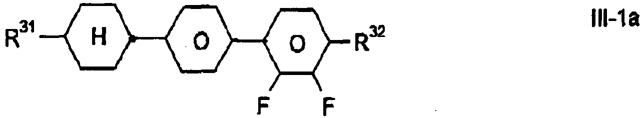 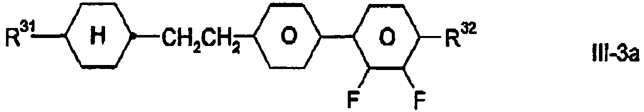 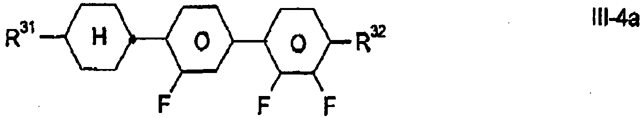 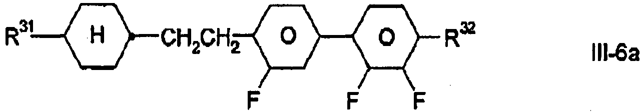 worin R³¹ und R³² die oben bei Formel III gegebene und bevorzugt die entsprechende oben bei Formeln III-1 bis III-6 gegebene Bedeutung besitzen.

Besonders bevorzugt enthalten die Flüssigkristallmedien eine oder mehrere Verbindungen ausgewählt aus der Gruppe der Verbindungen der Formeln II-6 und II-7 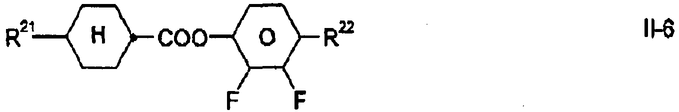 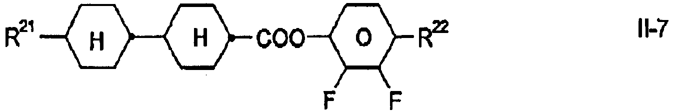 worin R²¹ und R²² die oben bei Formel II gegebene und bevorzugt die oben bei Formel II-1 gegebene Bedeutung besitzen.

Besonders bevorzugt enthalten die Flüssigkristallmedien eine oder mehrere Verbindungen der Formel III-2a 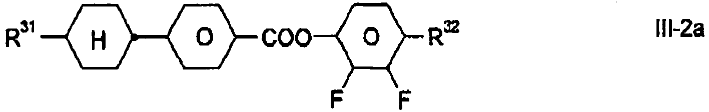 worin R³¹ und R³² die oben bei Formel III gegebene und bevorzugt die oben bei Formel III-2 gegebene Bedeutung besitzen.

Bevorzugt besteht die Komponente C überwiegend, besonders bevorzugt im wesentlichen vollständig und ganz besonders bevorzugt nahezu vollständig, aus einer oder mehreren Verbindungen der Formel IV. Diese Verbindungen der Formel IV werden bevorzugt ausgewählt aus der Gruppe der Verbindungen der Formeln IV-1 bis IV-3 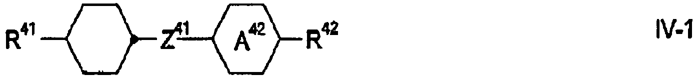 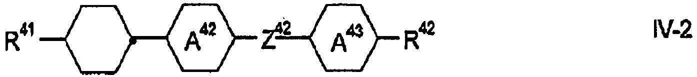 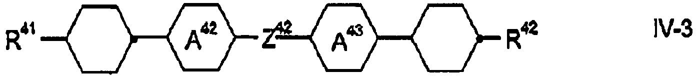 worin R⁴¹, R⁴², Z⁴¹, Z⁴², 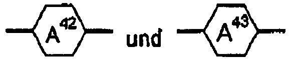 jeweils die oben
bei Formel IV angegebene entsprechende Bedeutung besitzen.

Insbesondere bevorzugt enthält das Flüssigkristallmedium eine oder mehrere Verbindungen ausgewählt aus der Gruppe der Verbindungen der Formeln IV-1a bis IV-1d, IV-1e, IV-2a bis IV-2e und IV-3a bis IV-3c 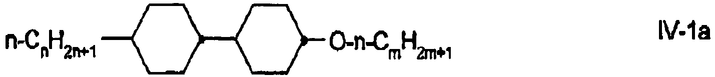 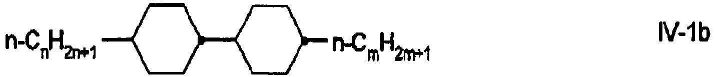 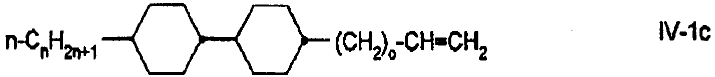 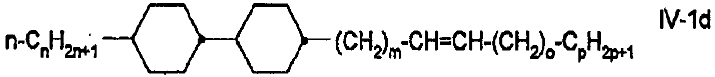 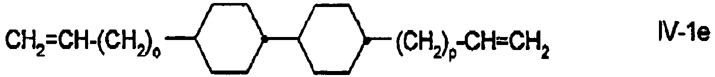 worin n und m jeweils unabhängig voneinander 1 bis 5 und o und p jeweils sowohl davon als auch voneinander unabhängig 0 bis 3 bedeuten, 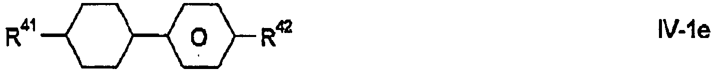 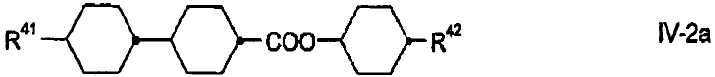 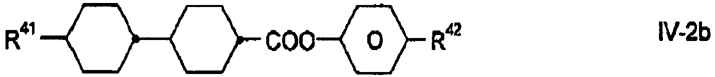 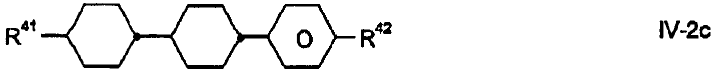 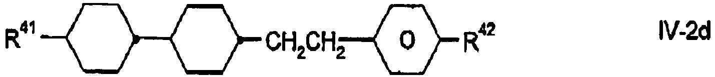 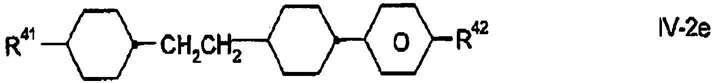 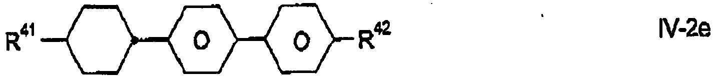 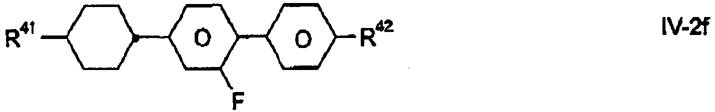 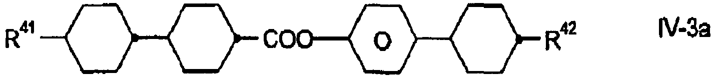 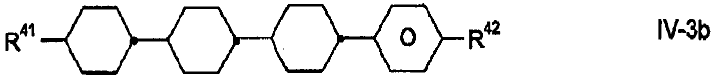 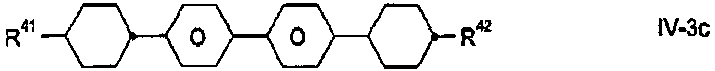 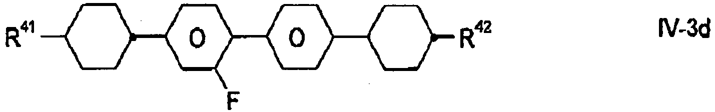 worin R⁴¹ und R⁴² jeweils die oben unter Formel IV1 angegebene Bedeutung besitzen und die Phenylringe optinal fluoriert sein können, jedoch nicht so, daß die Verbindungen mit denen der Formel II und ihren Unterformeln identisch sind. Bevorzugt ist R⁴¹ n-Alkyl mit 1 bis 5 C-Atomen, insbesondere bevorzugt mit 1 bis 3 C-Atomen und R⁴n-Alkyl oder n-Alkoxy mit 1 bis 5 C-Atomen oder Alkenyl mit 2 bis 5 C-Atomen. Hiervon sind insbesondere Verbindungen der Formeln IV1a bis IV1d bevorzugt

Bevorzugt besteht die Komponente D überwiegend, besonders bevorzugt im wesentlichen vollständig und ganz besonders bevorzugt nahezu vollständig, aus einer oder mehreren Verbindungen der Formel V. Diese Verbindungen der Formel V werden bevorzugt ausgewählt aus der Gruppe der Verbindungen der Formeln V-1 bis V-4 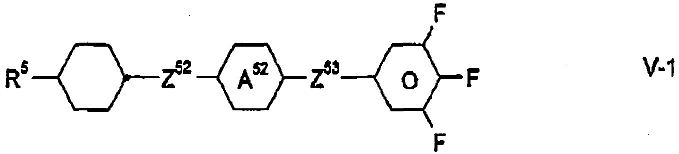 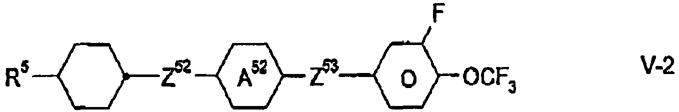 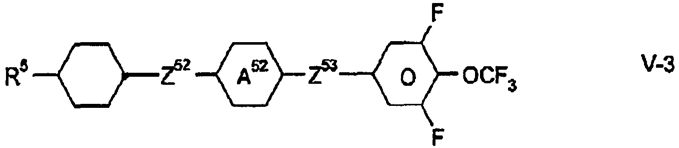 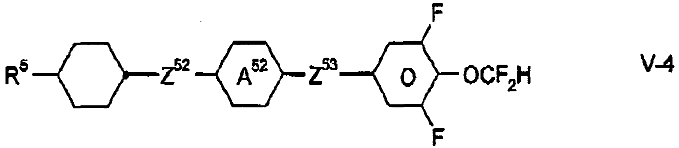 worin R⁵, Z⁵², Z⁵³ und 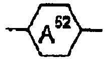 Die oben für Formel gegebene Bedeutung haben, jedoch bevorzugt
- R⁵: Alkyl mit 1-7 Atomen oder Alkenyl mit 2-7 C-Atomen, bevorzugt Vinyl oder 1 E Alkenyl,
eine von
- Z⁵² und Z⁵³: eine Einfachbindung und die andere -CH₂CH₂-, -COO- oder eine Einfachbindung und 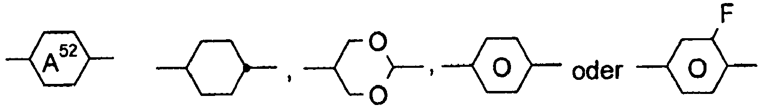
bedeuten.

In einer bevorzugten Ausführungsform enthalten die erfindungsgemäßen Flüssigkristallmedien insgesamt bezogen auf die Gesamtmischung
5 % bis 85 %, bevorzugt 10 % bis 55 % und besonders bevorzugt 10 % bis 30 % an Komponente A, bevorzugt an Verbindungen der Formel 1,
5 % bis 85 %, bevorzugt 10 % bis 85 %, besonders bevorzugt 20 % bis 80 % und ganz besonders bevorzugt 40 % bis 75 % an Komponente B, bevorzugt an Verbindungen der Formeln II und III.
0 % bis 50 %, bevorzugt 0 % bis 40 %, besonders bevorzugt 10 % bis 40 % und ganz besonders bevorzugt 5 % bis 25 % an Komponente C, bevorzugt an Verbindungen der Formel IV und
0 % bis 40 %, bevorzugt 0 % bis 30 %, besonders bevorzugt 0 % bis 20 % und ganz besonders bevorzugt 1 % bis 10 % an Komponente D, bevorzugt an Verbindungen der Formel V.

Hier, wie in der gesamten vorliegenden Anmeldung, bedeutet der Begriff Verbindungen auch geschrieben als Verbindung(en), sofern nicht explizit anders angegeben, sowohl eine als auch mehrere Verbindungen.

Hierbei werden die einzelnen Verbindungen in Konzentrationen jeweils von 1 % bis 25 %, bevorzugt von 2 % bis 20 % und besonders bevorzugt von 4 % bis 16 % eingesetzt. Eine Ausnahme bilden hier Verbindungen mit drei Phenylringen und Verbindungen mit vier sechsgliedrigen Ringen. Diese Verbindungen werden in Konzentrationen jeweils von 0,5 % bis 15 %, bevorzugt von 1 % bis 10% und besonders bevorzugt von 1 % bis 8 % je Einzelverbindung eingesetzt. Bei den Verbindungen der Formeln I-1a und I-1a-i bis I-1a-iii sind die bevorzugten Grenzen der Konzentrationen für den Anteil der Einzelverbindungen an dem Medium 1 % bis 20 %, bevorzugt 2 % bis 15 % und besonders bevorzugt 5 % bis 12 %. Bei den Verbindungen der Formel I sind die bevorzugten Grenzen der Konzentrationen für den Anteil der Einzelverbindungen an dem Medium 1 % bis 30 %, bevorzugt 2 % bis 20 % und besonders bevorzugt 8 % bis 12 %.

In einer bevorzugten Ausführungsform enthalten die Flüssigkristallmedien insbesondere bevorzugt insgesamt
10 % bis 35 % an Verbindungen der Formel I,
50 % bis 90 % an Verbindungen der Formeln II und III,
0 % bis 40 % an Verbindungen der Formel IV und
0 % bis 20 % an Verbindungen der Formel V.

Ganz besonders bevorzugt enthalten die Flüssigkristallmedien in dieser Ausführungsform insgesamt
15 % bis 30 % an Verbindungen der Formel I I-1a und I-1 a-i bis I-1 a-iii
60 % bis 80 % an Verbindungen der Formel II und III,
0 % bis 20 % an Verbindungen der Formel IV und
0 % bis 5 % an Verbindungen der Formel V.

In einer besonders bevorzugten Ausführungsform, die mit den oben beschriebenen bevorzugten Ausführungsformen für die bevorzugten Konzentrationsbereiche identisch sein kann und bevorzugt identisch ist, enthalten die Flüssigkristallmedien:
- eine oder mehrere Verbindungen der Formel I, und
- eine odere meherere der Verbindungen der Formeln I-1a und I-1a-i bis I-1 a-iii und
- eine oder mehrere Verbindungen der Formel II-1 und/oder, bevorzugt und
- eine oder mehrere Verbindungen der Formeln III-1 und/oder, bevorzugt und
- eine oder mehrere Verbindungen ausgewählt aus der Gruppe der Verbindungen der Formeln IV-1 und IV-2, bevorzugt
   - eine oder mehrere Verbindungen ausgewählt aus der Gruppe der Verbindungen der Formeln IV-1a bis IV-1e, IV-2c und IV-2e, ganz besonders bevorzugt ausgewählt aus der Gruppe der Formeln IV-1c, IV-2c und IV-1d und insbesondere der Formel IV-2c, und/oder, bevorzugt und
- eine oder mehrere Verbindungen ausgewählt aus der Gruppe der Verbindungen der Formeln V bis VII.

Hierbei sind besonders bevorzugt Flüssigkristallmedien welche
- eine oder mehrere Verbindungen der Formel I, bevorzugt mit R¹¹ n-Alkyl und R¹² Alkoxy oder Alkyl, und insbesondere jeweils pro Verbindung in Konzentrationen von 6 % bis 15 %, und
- eine oder mehrere Verbindungen der Formeln I-1a und I-1a-i bis I-1a-iii mit R¹¹n-Alkyl und R¹² Alkoxy, und insbesondere jeweils pro Verbindung in Konzentrationen von 6 % bis 15 %, und / oder
- eine oder mehrere Verbindungen der Formel II-1a und/oder II-1c, insbesondere jeweils pro Verbindung in Konzentrationen von 4 % bis 20 %, bevorzugt jeweils eine oder mehrere Verbindungen, bei der/denen R²¹ Alkyl mit 1-5 C-Atomen und R²² mit 1-4C-Atomen ist, und/oder
- eine oder mehrere Verbindungen der Formel III-1a, insbesondere jeweils pro Verbindung in Konzentrationen von 3 % bis 15 %, bevorzugt jeweils eine oder mehrere Verbindungen, bei der/denen R³¹ Alkyl mit 1 bis 3 C-Atomen und R³² Alkoxy mit 1 bis 4 C-Atomen ist und/oder
- eine oder mehrere Verbindungen der Formeln IV-1a bis IV-1c und/oder IV-2c, bevorzugt der Formeln IV-1c und/oder IV-2c.
enthalten.

Diese Medien können gegebenenfalls eine oder mehrere Verbindungen ausgewählt aus der Gruppe der Verbindungen der Formel V enthalten.

Die erfindungsgemäßen Flüssigkristallmedien weisen bevorzugt nematische Phasen von jeweils mindestens von -20 °C bis 70 °C, besonders bevorzugt von -30 °C bis 80 °C, ganz besonders bevorzugt von -40 °C bis 80 °C und am allermeisten bevorzugt von -40 °C bis 105 °C auf.

Hierbei bedeutet der Begriff eine nematische Phase aufweisen einerseits, daß bei tiefen Temperaturen bei der entsprechenden Temperatur keine smektische Phase und keine Kristallisation beobachtet wird und andererseits, daß beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen, einer der elektrooptischen Anwendung entsprechenden Schichtdicke, für mindestens 100 Stunden überprüft. Bei hohen Temperaturen wird der Klärpunkt nach üblichen Methoden in Kapillaren gemessen.

Ferner sind die erfindungsgemäßen Flüssigkristallmedien durch relativ hohe optische Anisotropien gekennzeichnet. Die Werte der Doppelbrechung liegen bevorzugt im Bereich von 0,090 bis 0,180, besonders bevorzugt im Bereich von 0,105 bis 0,160 und ganz besonders bevorzugt im Bereich von 0,110 bis 0,150.

Außerdem weisen die erfindungsgemäßen Flüssigkristallmedien kleine Werte für die Schwellenspannung (V₀), bevorzugt kleiner oder gleich 2,2 V, bevorzugt kleiner oder gleich 2,0 V, besonders bevorzugt kleiner oder gleich 1,9 V und ganz besonders bevorzugt kleiner oder gleich 1,85 V auf.

Diese bevorzugten Werte für die einzelnen physikalischen Eigenschaften werden auch jeweils miteinander kombiniert eingehalten.

So weisen die erfindungsgemäßen Flüssigkristallmedien z.B. bei einem Klärpunkt von 90°C und weniger und einem Betrag der dielektrischen Anisotropie (|Δε|) von 5 oder weniger
- bei einer Doppelbrechung von 0,15 und weniger eine Rotationsviskosität von 260 mPa·s oder weniger,
- bei einer Doppelbrechung von 0,12 und weniger eine Rotationsviskosität von 223 mPa·s oder weniger und
- bei einer Doppelbrechung von 0,10 und weniger eine Rotationsviskosität von 211 mPa·s oder weniger auf.

Bei einem Klärpunkt von 70°C und weniger und einem Betrag der dielektrischen Anisotropie (|Δε|) von 3,5 oder weniger weisen die erfindungsgemäßen Flüssigkristallmedien
- bei einer Doppelbrechung von 0,15 und weniger eine Rotationsviskosität von 155 mPa·s oder weniger,
- bei einer Doppelbrechung von 0,12 und weniger eine Rotationsviskosität von 120 mPa·s oder weniger,
- bei einer Doppelbrechung von 0,11 und weniger eine Rotationsviskosität von 118 mPa·s oder weniger und
- bei einer Doppelbrechung von 0,10 und weniger eine Rotationsviskosität von 115 mPa·s oder weniger auf.

Unabhängig von den oben angegebenen Bemessungsgrenzen für die Verbindungen der Formeln I, I-1a und I-1a-i bis I-1a-iii, II und III werden in den Flüssigkristallmedien gemäß der vorliegenden Anmeldung Verbindungen der Formeln I, I-1a und I-1a-i bis I-1a-iii und II in einer Konzentration bis zu ca. 25 % je Einzelsubstanz und Verbindungen der Formel III in einer Konzentration bis zu ca. 20 %, bevorzugt bis zu 16 %, je Einzelsubstanz eingesetzt. Verbindungen der Formel I, I-1a und I-1a-i bis I-1a-iii werden bevorzugt in Konzentrationen bis zu ca. 15 %, bevorzugt bis zu 10 %, je Einzelsubstanz eingesetzt.

In der vorliegenden Anmeldung bedeutet "≤" kleiner oder gleich, bevorzugt kleiner und "≥" größer oder gleich, bevorzugt größer.

In der vorliegenden Anmeldung bedeuten 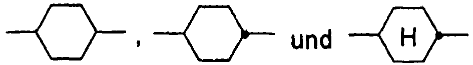 trans-1,4-cyclohexylen.

In der vorliegenden Anmeldung bedeuten die Begriffe dielektrisch positive Verbindungen solche Verbindungen mit einem Δε > 1,5, dielektrisch neutrale Verbindungen solche mit-1,5 ≤ Δε ≤ 1,5 und dielektrisch negative Verbindungen solche mit Δε < -1,5. Hierbei wird die dielektrische Anisotropie der Verbindungen bestimmt, indem 10 % der Verbindungen in einem flüssigkristallinen Host gelöst werden und von dieser Mischung die Kapazität in mindestens jeweils einer Testzelle mit 20 µm Schichtdicke mit homeotroper und mit homogener Oberflächenorientierung bei 1 kHz bestimmt wird. Die Meßspannung beträgt typischerweise 0,5 V bis 1,0 V, jedoch stets weniger als die kapazitive Schwelle der jeweiligen Flüssigkristallmischung.

Als Hostmischung für dielektrisch positive und dielektrisch neutrale Verbindungen wird ZLI-4792 und für dielektrisch negative Verbindungen ZLI-2857, beide von Merck KGaA Deutschland, verwendet. Aus der Änderung der Dielektrizitätskonstanten der Hostmischung nach Zugabe der zu untersuchenden Verbindung und Extrapolation auf 100 % der eingesetzten Verbindung werden die Werte für die jeweiligen zu untersuchenden Verbindungen erhalten.

Der Begriff Schwellenspannung bezieht sich üblicher Weise auf die optische Schwelle für 10 % relativen Kontrast (V₁₀), sofern nicht explizit anders angegeben.

In der vorliegenden Anmeldung wird jedoch in Bezug auf die Flüssigkristallmischungen mit negativer dielektrischer Anisotropie der Begriff Schwellenspannung für die kapazitive Schwellenspannung (V₀) auch Freedericksz-Schwelle genannt, verwendet, sofern nicht explizit anders angegeben.

Alle Konzentrationen in dieser Anmeldung, soweit nicht explizit anders vermerkt, sind in Massenprozent angegeben und beziehen sich auf die entsprechende Mischung oder Mischungskomponente. Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20 °C, sofern nicht explizit anders angegeben. Δn wird bei 589 nm und Δε bei 1 kHz bestimmt

Bei den Flüssigkristallmedien mit negativer dielektrischer Anisotropie wurde die Schwellenspannung als kapazitive Schwelle V₀ (auch Freedericksz-Schwelle genannt) in bei Merck KGaA, Deutschland, hergestellten Testzellen mit durch die Orientierungsschicht SE 1211 der Fa. Nissan Chemicals homeotrop orientiertem Flüssigkristall bestimmt

Die Dielektrika können auch weitere, dem Fachmann bekannte und in der Literatur beschriebenen Zusätze enthalten.

Beispielsweise können 0-15% pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplex salze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 W4, 23 21632, 23 38 281, 24 50 088, 26 37 430 und 28 53 728 beschrieben.

Die erfindungsgemäßen Flüssigkristallmedien können bei Bedarf auch chirale Dotierstoffe in den üblichen Mengen enthalten. Die eingesetzte Menge dieser Dotierstoffe beträgt insgesamt 0 % bis 10 % bezogen auf die Menge der gesamten Mischung bevorzugt 0,1 % bis 6 %. Die Konzentrationen der einzelnen eingesetzten Verbindungen beträgt bevorzugt 0,1 % bis 3 %. Die Konzentration dieser und ähnlicher Zusatzstoffe wird bei der Angabe der Konzentrationen sowie der Konzentrationsbereiche der Flüssigkristallverbindungen in den Flüssigkristallmedien nicht berücksichtigt.

Nachfolgend werden Dotierstoffe angegeben, die den erfindungsgemäßen Mischungen zugesetzt werden können:

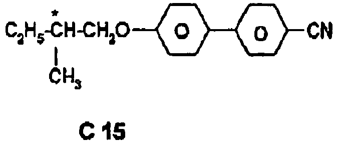

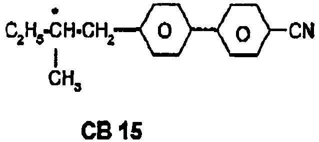

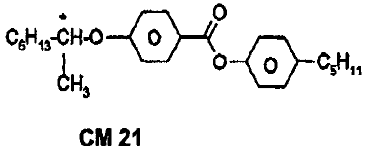

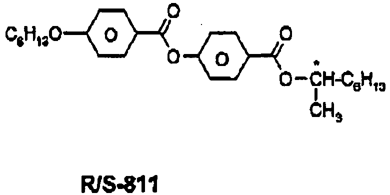

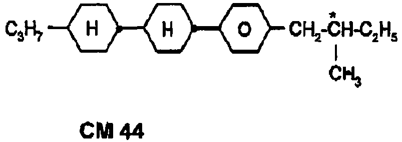

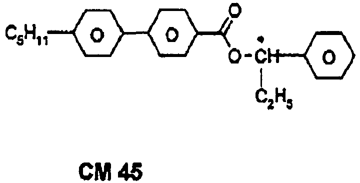

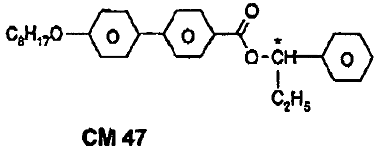

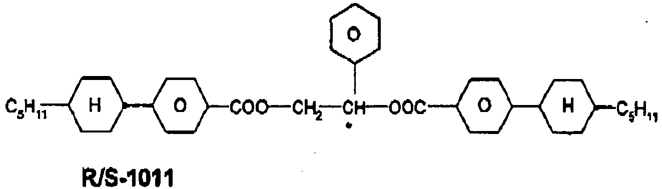

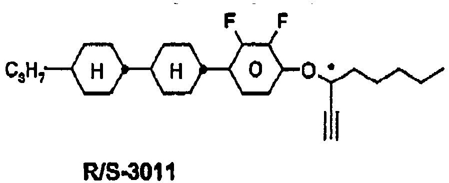

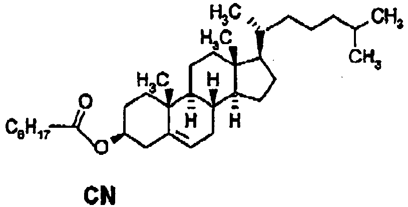

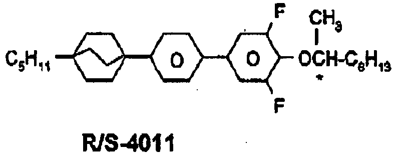

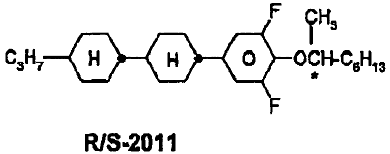

Die Zusammensetzungen bestehen aus mehreren Verbindungen, bevorzugt aus 3 bis 30, besonders bevorzugt aus 6 bis 20 und ganz besonders bevorzugt aus 10 bis 16 Verbindungen, die auf herkömmliche Weise gemischt werden. In der Regel wird die gewünschte Menge der in geringerer Menge verwendeten Komponenten in den den Hauptbestandteil ausmachenden Komponenten gelöst, zweckmäßigerweise bei erhöhter Temperatur. Liegt die gewählbe Temperatur über dem Klärpunkt des Hauptbestandteils, so ist die Vervollständigung des Lösungsvorgangs besonders leicht zu beobachten. Es ist jedoch auch möglich, die Flüssigkristallmischungen auf anderen üblichen Wegen, z.B. unter Verwendung von Vormischungen oder aus einem sogenannten "Multi Bottle System" herzustellen.

Mittels geeigneter Zusatzstoffe können die erfindungsgemäßen Flüssigkristallphasen derart modifiziert werden, daß sie in jeder bisher bekannt gewordenen Art von ECB-, VAN-, IPS-, GH- oder ASM-PA LCD-Anzeige einsetzbar sind.

Die nachstehenden Beispiele dienen zur Veranschaulichung der Erfindung, ohne sie zu beschränken. In den Beispielen sind der Schmelzpunkt T (C,N), der Übergang von der smektischen (S) zur nematischen (N) Phase T(S,N) und Klärpunkt T (N,I) einer Flüssigkristallsubstanz in Grad Celsius angegeben.

Soweit nicht anders gekennzeichnet, sind vor- und nachstehend alle Prozentzahlen Gewichtsprozente und die physikalischen Eigenschaften sind die Werte bei 20 °C, sofern nicht explizit anders angegeben.

Alle angegebenen Werte für Temperaturen in dieser Anmeldung sind °C und alle Temperaturdifferenzen entsprechend Differenzgrad, sofern nicht explizit anders angegeben.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹, R², L¹, L², L³ | R¹ | R² | L¹ | L² | L³ |
|---|---|---|---|---|---|
| nm | CₙH₂ₙ₊₁ | CₘH₂ₘ₊₁ | H | H | H |
| nOm | CₙH₂ₙ₊₁ | OCₘH₂ₘ₊₁ | H | H | H |
| nO.m | OCₙH₂ₙ₊₁ | CᵣₙH₂ₘ₊₁ | H | H | H |
| nmFF | CₙH₂ₙ₊₁ | CₘH₂ₘ₊₁ | H | F | F |
| nOmFF | CₙH₂ₙ₊₁ | OCₘH₂ₘ₊₁ | H | F | F |
| n | CₙH₂ₙ₊₁ | CN | H | H | H |
| nN.F | CₙH₂ₙ₊₁ | CN | F | H | H |
| nN.F.F | CₙH₂ₙ₊₁ | CN | F | F | H |
| nF | CₙH₂ₙ₊₁ | F | H | H | H |
| nF.F | CₙH₂n-+₁ | F | F | H | H |
| nF.F.F | CₙH₂ₙ₊₁ | F | F | F | H |
| nOF | OCₙH₂ₙ₊₁ | F | H | H | H |
| nCl | CₙH₂ₙ₊₁ | Cl | H | H | H |
| nCl.F | CₙH₂ₙ₊₁ | Cl | F | H | H |
| nCl.F.F | CₙH₂ₙ₊₁ | Cl | F | F | H |
| nCF₃ | CₙH₂ₙ₊₁ | CF₃ | H | H | H |
| nCF₃.F | CₙH₂ₙ₊₁ | CF₃ | F | H | H |
| nCF₃.F.F | CₙH₂ₙ₊₁ | CF₃ | F | F | H |
| nOCF₃ | CₙH₂ₙ₊₁ | OCF₃ | H | H | H |
| nOCF₃.F | CₙH₂ₙ₊₁ | OCF₃ | F | H | H |
| nOCF₃.F.F | CₙH₂ₙ₊₁ | OCF₃ | F | F | H |
| nOCF₂ | CₙH₂ₙ₊₁ | OCHF₂ | H | H | H |
| nOCF₂.F | CₙH₂ₙ₊₁ | OCHF₂ | F | H | H |
| nOCF₂.F.F | CₙH₂ₙ₊₁ | OCHF₂ | F | F | H |
| NS | CₙH₂ₙ₊₁ | NCS | H | H | H |
| nS.F | CₙH₂ₙ₊₁ | NCS | F | H | H |
| nS.F.F | CₙH₂ₙ₊₁ | NCS | F | F | H |
| RVsN | CᵣH₂ᵣ₊₁-CH=CH-C₃H₂ₛ- | CN | H | H | H |
| REsN | CᵣH₂ᵣ₊₁-O-C₃H₂ₛ- | CN | H | H | H |

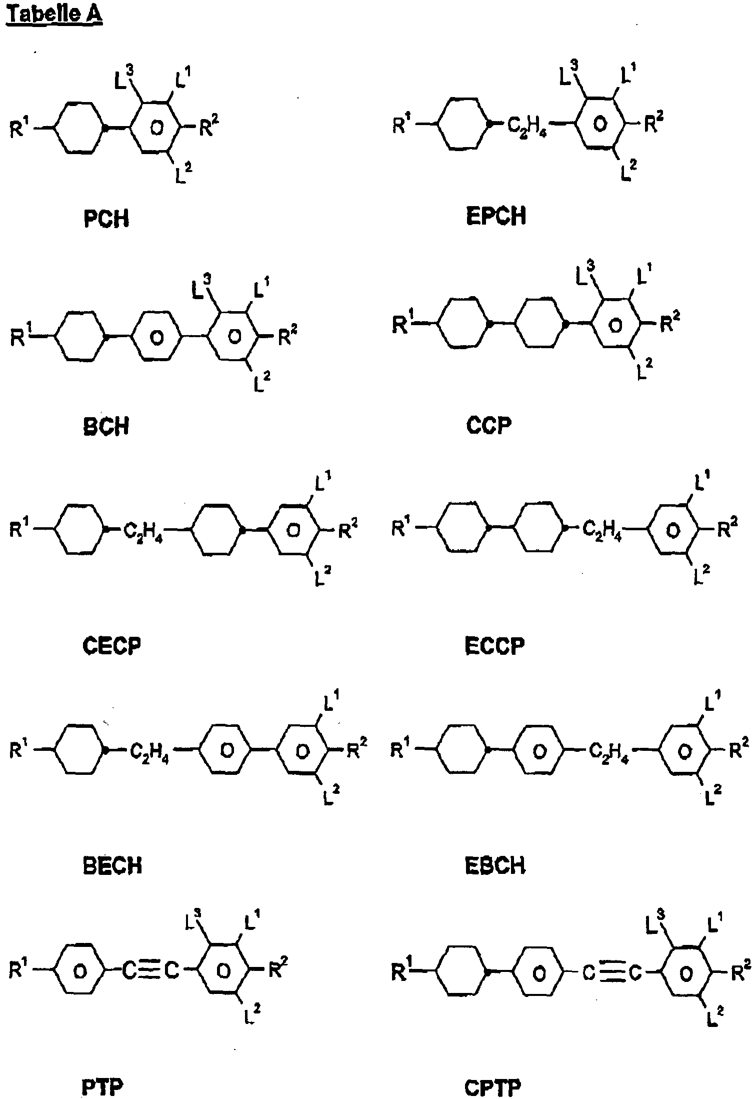

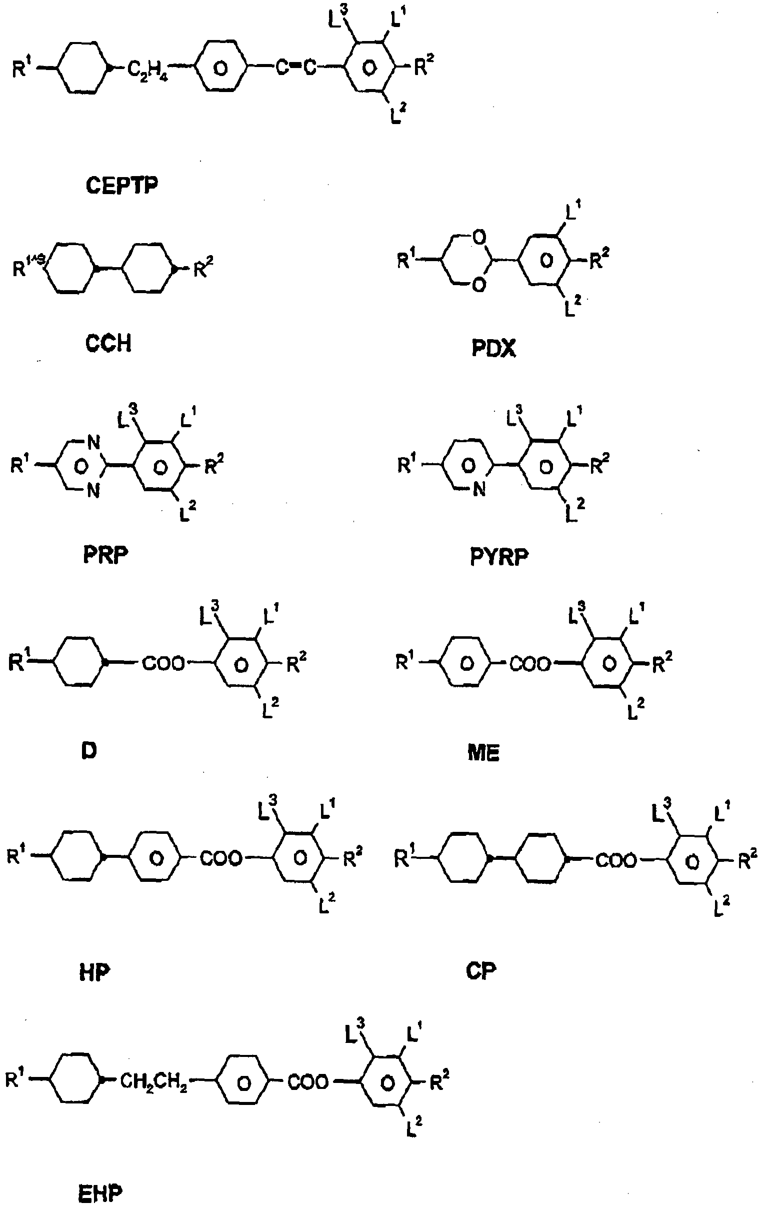

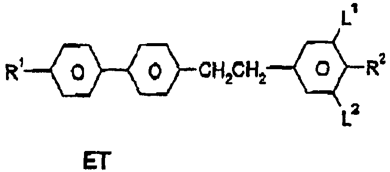

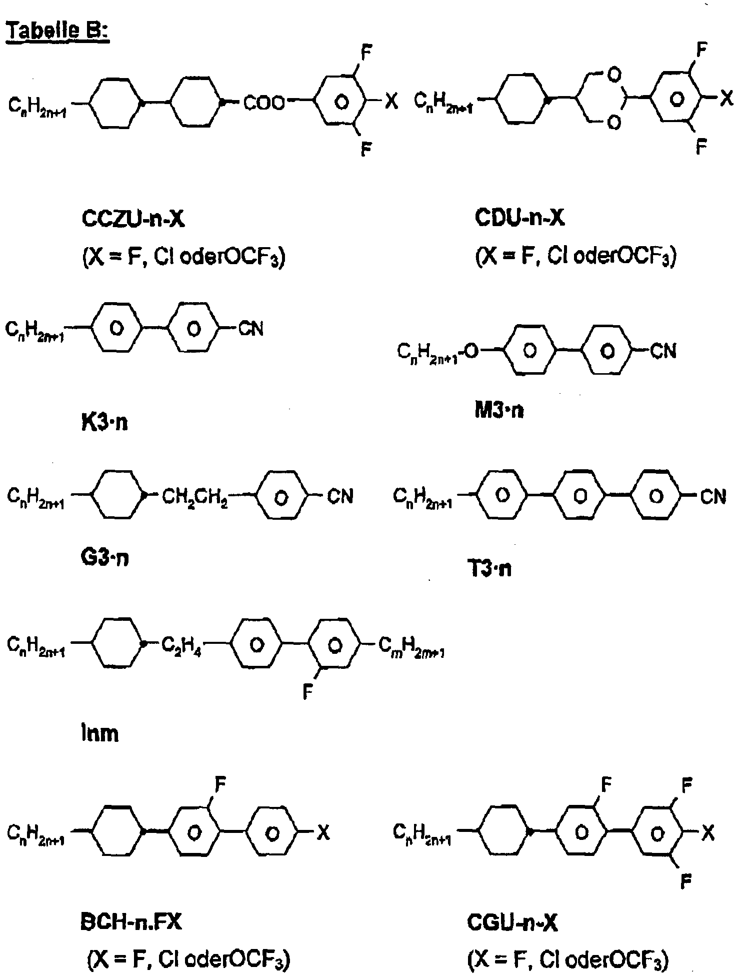

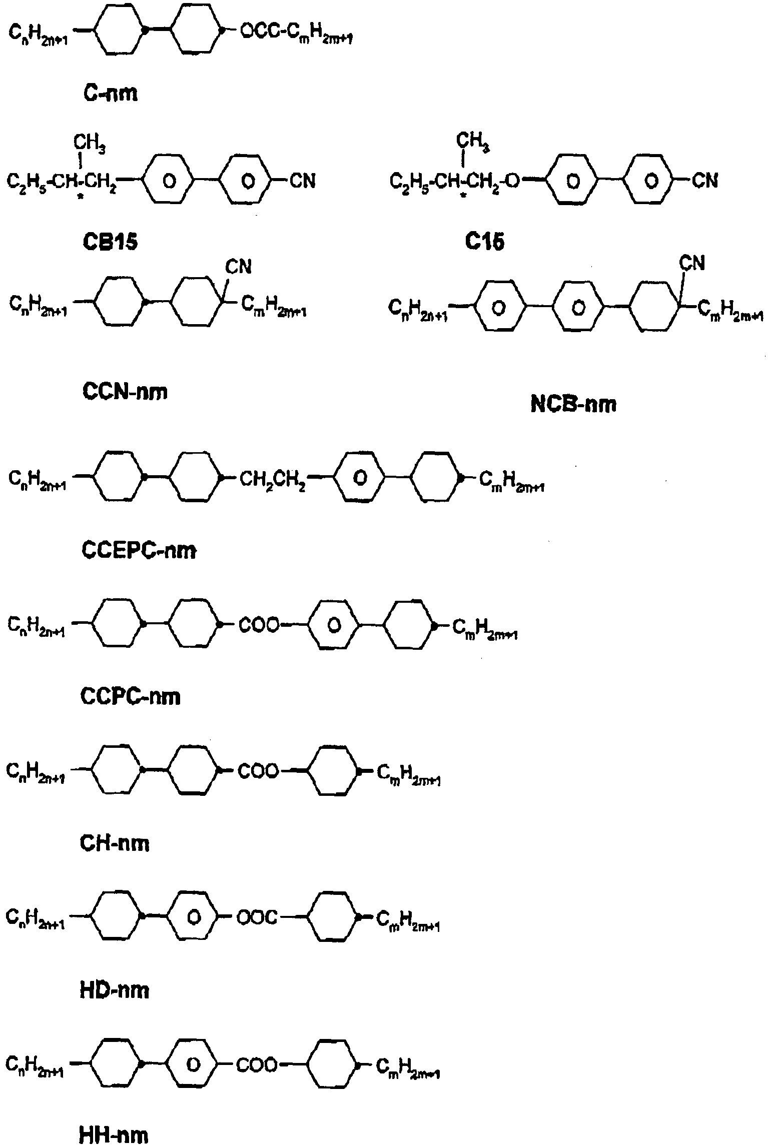

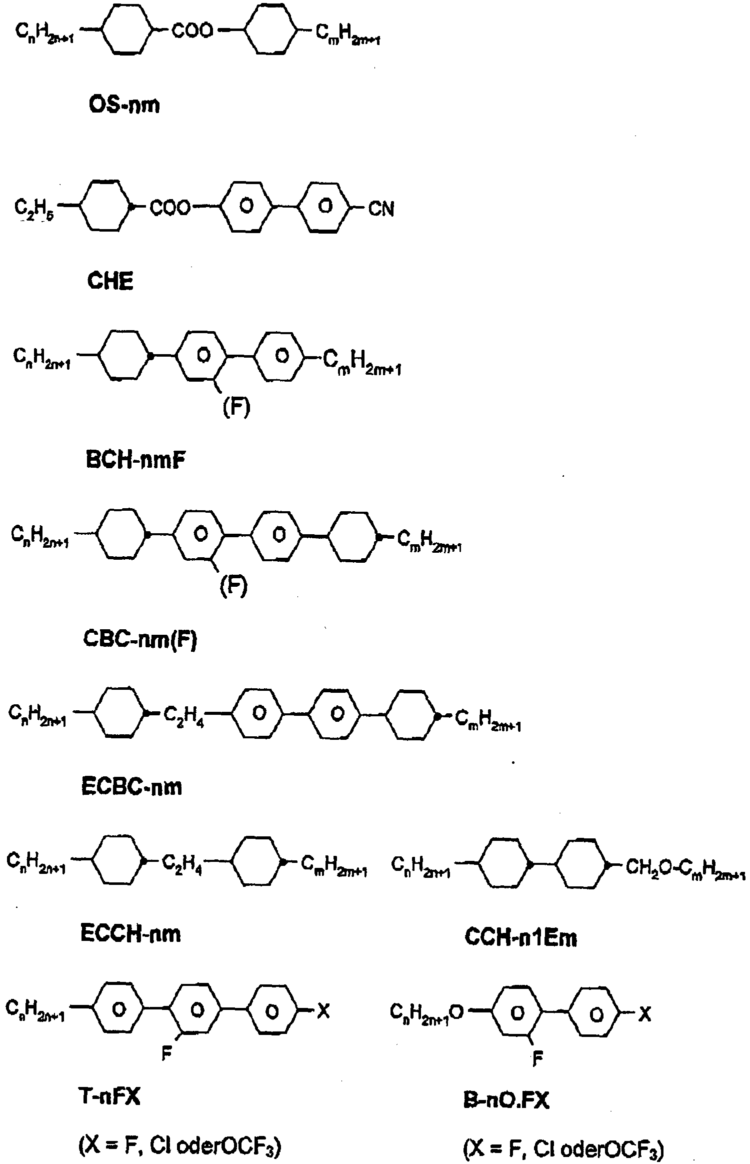

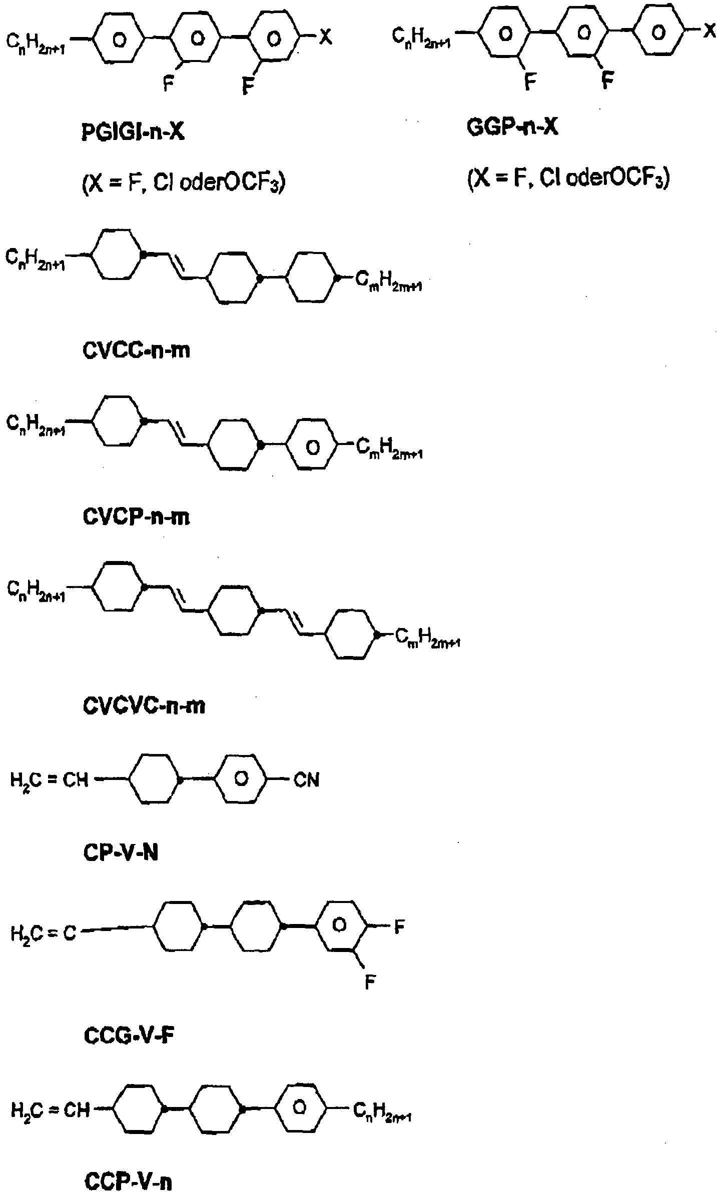

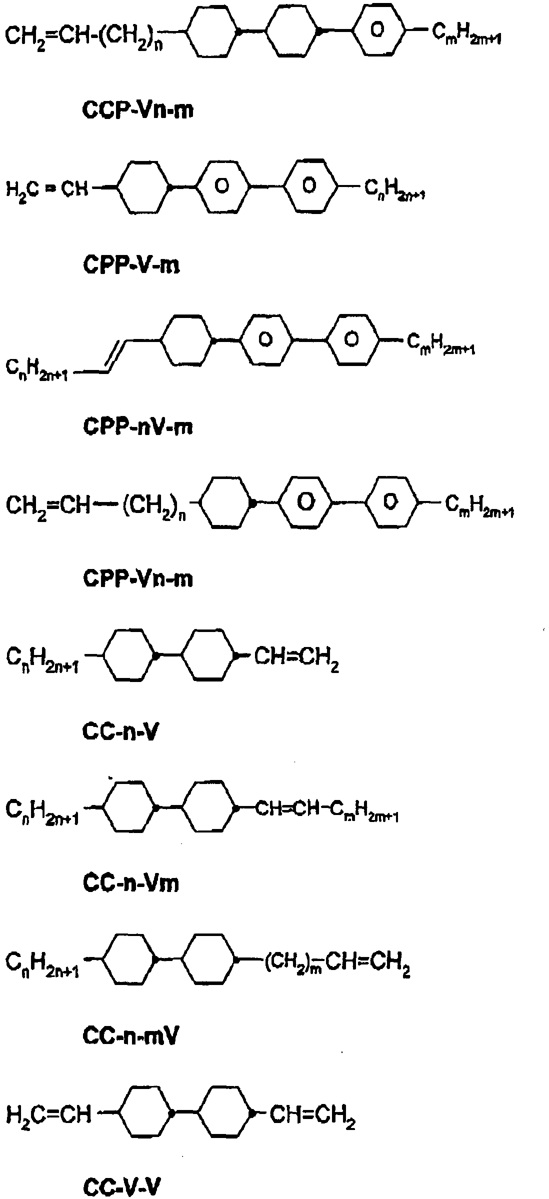

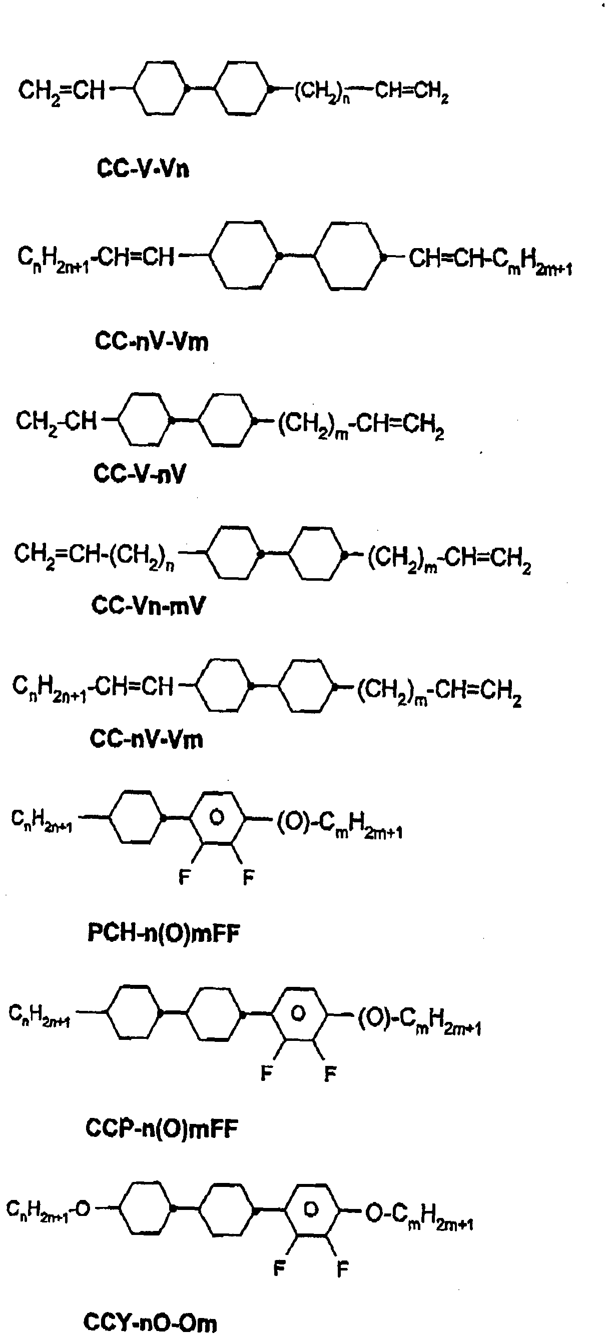

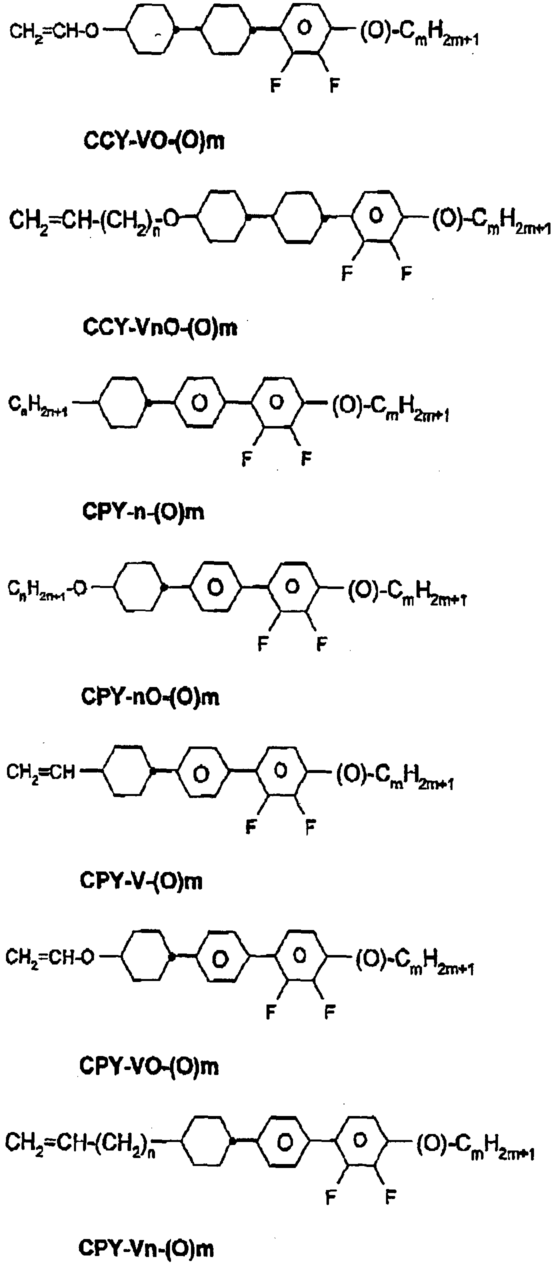

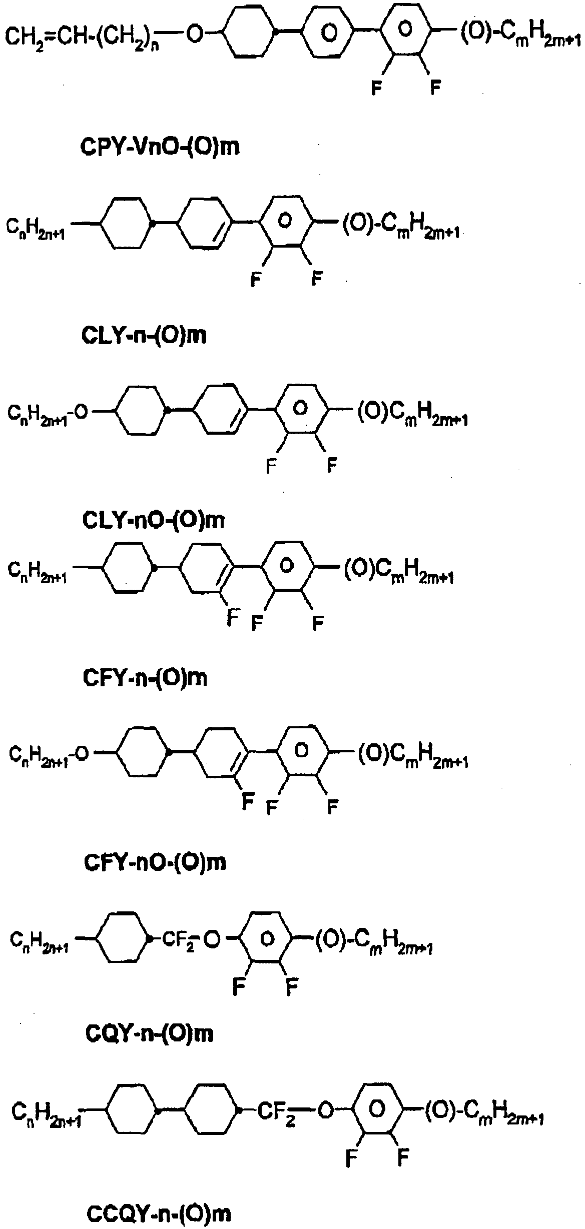

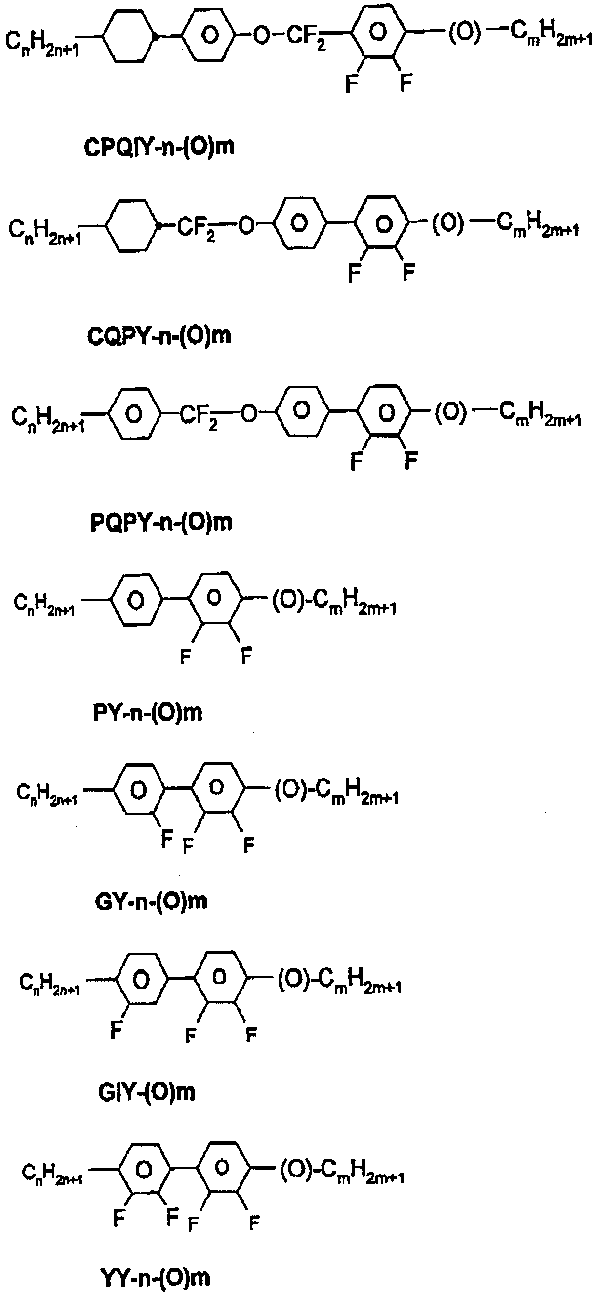

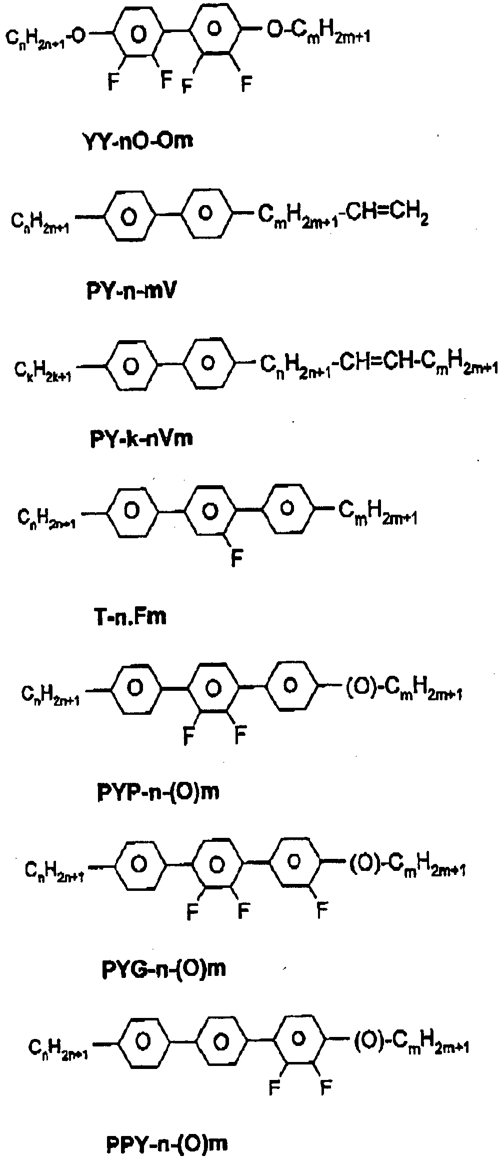

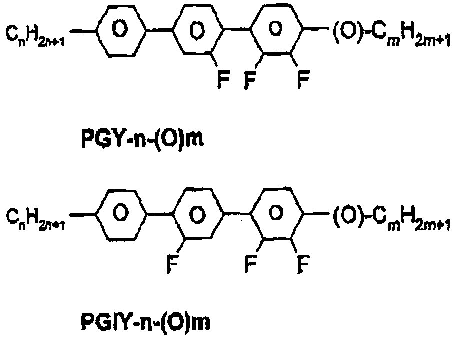

Bevorzugt enthalten die erfindungsgemäßen Flüssigkristallmedien fünf oder mehr, besonders bevorzugt sechs oder mehr und ganz besonders bevorzugt sieben oder mehr Verbindungen ausgewählt aus den Formeln der Tabellen A und B.

Bevorzugt enthalten die erfindungsgemäßen Flüssigkristallmedien zwei oder mehr, besonders bevorzugt drei oder mehr und ganz besonders bevorzugt vier oder mehr Verbindungen ausgewählt aus den Formeln der Tabelle A.

Bevorzugt enthalten die erfindungsgemäßen Flüssigkristallmedien drei oder mehr, besonders bevorzugt vier oder mehr und ganz besonders bevorzugt fünf oder mehr Verbindungen ausgewählt aus den Formeln der Tabelle B.

Diese Verbindungen sind bevorzugt Verbindungen von verschiedenen Formeln aus diesen Tabellen.

### Beispiele

Die folgenden Beispiele sollen die Erfindung erläutem, ohne sie zu begrenzen. Vor- und nachstehend bedeuten Prozentangaben Gewichtsprozent. Alle Temperaturen sind in Grad Celsius angegeben. Δn bedeutet optische Anisotropie (589 nm, 20 °C), Δε die dielektrische Anisotropie (1 kHz, 20 °C), H.R. die Voltage Holding Ratio (bei 100 °C, nach 5 Minuten im Ofen, 1 V), V₀ die Schwellenspannung, wurde bei 20 °C bestimmt.

### Vergleichsbeispiel 1

Es wurde die Flüssigkristallmischung des Beispiels 6 der GB2300642 hergestellt. Die Zusammensetzung und die physikalischen Eigenschaften dieser Mischung sind in der folgenden Tabelle zusammengestellt.

| Verbindung/ Abkürzung | Konzentration/ Massen-% | Physikalische Eigenschaften | | |
|---|---|---|---|---|
| PY-3-02 | 15,0 | T(N,1) | = 87,6 | °C |
| PY-3-04 | 18,0 | nₑ(20°C, 589 nm) | = 1,7255 | |
| PGIGI-3-Cl | 10,0 | Δn (20°C, 589 nm) | 0,2116 | |
| PGIGI-5-Cl | 15,0 | | | |
| D-402FF | 4,0 | Δe (20°C, 1 kHz) | = -2,6 | |
| T-2.F3 | 11,0 | γ₁ (20 °C) | = 172 | mPa·s |
| CBC-33F | 3,0 | V₀ (20 °C) | = 2,41 | V |
| CBC-53F | 3,0 | | | |
| CBC-55F | 3.0 | | | |
| PYP-2-3 | 15,0 | | | |
| Σ | 100,0 | | | |

Das Flüssigkristallmedium wird in eine VA-Anzeige mit TFT-Ansteuerung gefüllt.

### Beispiel 1

Es wurde eine Flüssigkristallmischung mit ähnlicher Zusammensetzung wie der des Vergleichsbeispiels 1 hergestellt. Die wesentliche Veränderung besteht in der Verwendung der fluorierten Terphenyle der Formel I gemäß der vorliegenden Anmeldung anstelle der terminal polar substituierten, lateral fluorierten Terphenyle der Vergleichsmischung. Die Zusammensetzung und die physikalischen Eigenschaften dieser Mischung sind in der folgenden Tabelle zusammengestellt.

| Verbindung/ Abkürzung | Konzentration/ Massen-% | Physikalische Eigenschaften | | |
|---|---|---|---|---|
| PY-3-02 | 8,0 | T(N, I) | = 88,0 | °C |
| Po-5-02 | 8,0 | nₑ(20°C, 589 nm) | = 1,7080 | |
| PGIGI-3-F | 8,0 | Δn (20°C, 589 nm) | = 0,2050 | |
| PP-1-2V | 4,0 | | | |
| PP-1-2V1 | 6,0 | Δε (20°C, 1 kHz) | = -3,2 | |
| BCH-32 | 6,0 | γ₁ (20 °C) | = 147 | mPa·s |
| CPY-2-02 | 9,0 | V₀ (20 °C) | = 2,30 | V |
| CPY-3-02 | 9,0 | | | |
| PYP-2-3 | 10,0 | | | |
| PGIY-2-1 | 8,0 | | | |
| PGIY-3-1 | 8,0 | | | |
| PGIY-2-04 | 8,0 | | | |
| PGIY-3-04 | 8,0 | | | |
| Σ | 100,0 | | | |

Wie in Vergleichsbeispiel 1 wird das Flüssigkristallmedium in eine VA Anzeige mit TFT-Ansteuerung gefüllt. Diese Anzeige zeichnet sich insbesondere dadurch aus, daß sie eine niedrigere Ansteuerspannung benötigt und schneller schaltet als die mit der Mischung des Vergleichsbeispiels 1. Allerdings liegt die Doppelbrechung der Mischung nicht im am meisten bevorzugten Bereich gemäß der vorliegenden Anmeldung, sondern wesentlich höher und erfordert somit den Einsatz von Zellen mit besonders dünnen Schichten.

### Beispiele 2

Es wurde eine Flüssigkristallmischung nach der vorliegenden Anmeldung hergestellt. Die Zusammensetzung und die physikalischen Eigenschaften dieser Mischung sind in der folgenden Tabelle zusammengestellt.

| Verbindung/ Abkürzung | Konzentration/ Massen-% | Physikalische Eigenschaften | | |
|---|---|---|---|---|
| PCH-304FF | 16,0 | T(N,I) | = 68,5 | °C |
| PCH-502FF | 8,0 | nₑ(20°C, 589 nm) | = 1,6505 | |
| BCH-32 | 8,0 | Δn (20°C, 589 nm) | 0,1507 | |
| CC-3-V | 10,0 | ε∥ (20°C, 1 kHz) | = 4,1 | |
| CPY-2-02 | 12,0 | Δε (20°C, 1 kHz) | = -3,8 | |
| CPY-3-02 | 12,0 | γ₁ (20 °C) | = 155 | mPa·s |
| PYP-2-3 | 12,0 | k₁ (20°C) | = 13,3 | pN |
| PYP-3-3 | 11,0 | k₁/k₃ (20°C) | = 1,12 | |
| PY-1-1 | 11,0 | tstore (-40°C) | > 1.000 | h |
| Σ | 100,0 | V₀ (20 °C) | = 1,97 | V |

Wie in Vergleichsbeispiel 1 wird das Flüssigkristallmedium in eine VA-Anzeige mit TFT-Ansteuerung gefüllt. Diese Anzeige zeichnet sich insbesondere dadurch aus, daß sie eine relativ niedrige Ansteuerspannung benötigt und sehr schnell schaltet.

## Patentansprüche

1. Nematisches Flüssigkristallmedium, **dadurch gekennzeichnet, dass** es
a) eine dielektrisch negative, flüssigkristalline Komponente (Komponente A) enthält, die eine oder mehrere dielektrisch negative Verbindung(en) der Formel I enthält 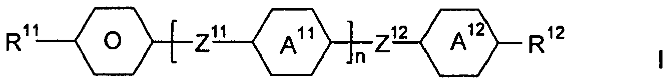 worin
R¹¹ und R¹² , jeweils unabhängig voneinander, Alkyl mit 1 bis 7 C-Atomen, Alkoxy mit 1 bis 7 C-Atomen oder Alkoxyalkyl, Alkenyl oder Alkenyloxy mit 2 bis 7 C-Atomen, 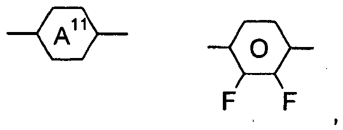 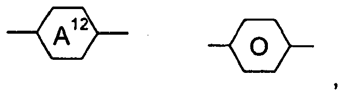
Z¹¹ und Z¹² eine Einfachbindung und
n 1
und
b) eine weitere dielektrisch negative, von Komponente A verschiedene flüssigkristalline Komponente (Komponente B),
enthält,
und dadurch, dass es eine oder mehrere dielektrisch negative Verbindungen ausgewählt aus der Gruppe der Verbindungen der Formeln I-1a und I-1a-i bis I-1a-iii 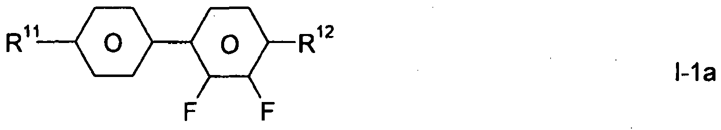 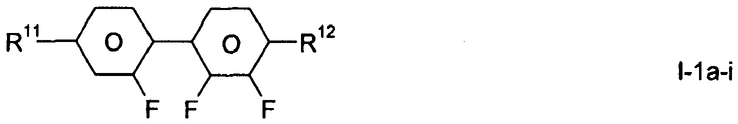 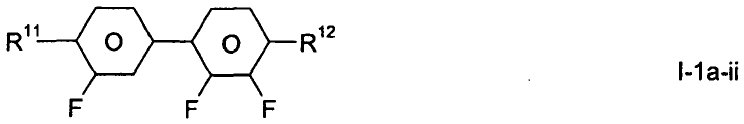 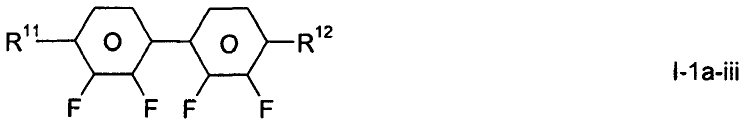 worin
R¹¹ und R¹² die oben gegebene Bedeutung besitzen,
enthält.

2. Flüssigkristallmedium nach Anspruch 1, **dadurch gekennzeichnet, dass** es eine oder mehrere dielektrisch negative Verbindungen der Formeln I-1a 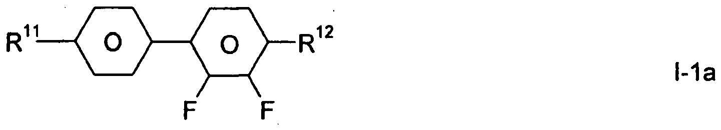 enthält.

3. Flüssigkristallmedium nach Anspruch 1 oder 2, **dadurch gekennzeichnet, dass** es
c) eine dielektrisch neutrale, flüssigkristalline Komponente (Komponente C),
enthält.

4. Flüssigkristallmedium nach einem oder mehreren der Ansprüche 1 bis 3, **dadurch gekennzeichnet, dass** es
d) eine dielektrisch positive, flüssigkristalline Komponente (Komponente D)
enthält.

5. Flüssigkristallmedium nach einem oder mehreren der Ansprüche 1 bis 4, **dadurch gekennzeichnet, dass** es eine Komponente B enthält, die eine oder mehrere Verbindungen ausgewählt aus der Gruppe der Verbindungen der Formeln II und III enthält 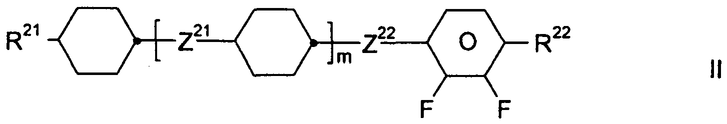 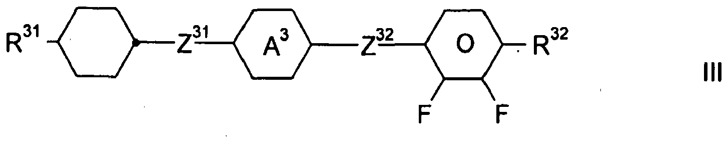 worin
R²¹, R²², R³¹ und R³², jeweils unabhängig voneinander, Alkyl oder Alkoxy mit 1 bis 7 C-Atomen oder Alkoxyalkyl, Alkenyl oder Alkenyloxy mit 2 bis 7 C-Atomen,
Z²¹, Z²², Z³¹ und Z³² , jeweils unabhängig voneinander, -CH₂-CH₂-, -CH=CH-, -C=C-, -COO- oder eine Einfachbindung,
m 0 oder 1 und 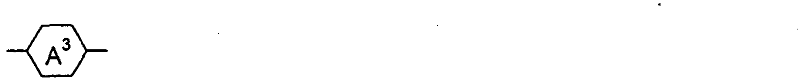 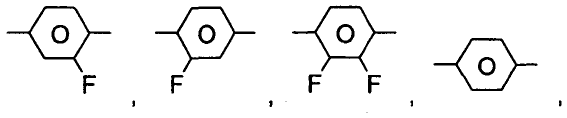 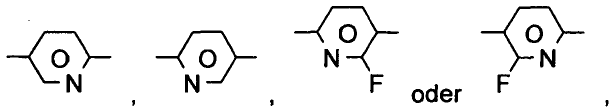
bedeuten.

6. Flüssigkristallmedium nach Anspruch 5, **dadurch gekennzeichnet, dass** es eine oder mehrere Verbindungen der Formel II wie in Anspruch 5 gegeben enthält.

7. Flüssigkristallmedium nach Anspruch 5 oder 6, **dadurch gekennzeichnet, dass** es eine oder mehrere Verbindungen der Formel III wie in Anspruch 6 gegeben enthält.

8. Flüssigkristallmedium nach einem oder mehreren der Ansprüche 3 bis 7, **dadurch gekennzeichnet, dass** die dielektrisch neutrale, flüssigkristalline Komponente (Komponente C) eine oder mehrere Verbindungen ausgewählt aus der Gruppe der Verbindungen der Formel IV 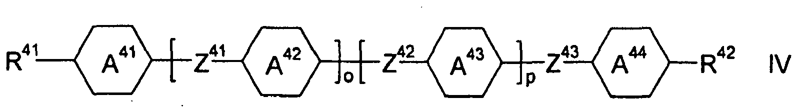 worin
R⁴¹ und R⁴² , jeweils unabhängig voneinander, die in Anspruch 5 bei Formel II für R²¹ gegebene Bedeutung besitzen,
Z⁴¹, Z⁴² und Z⁴³, jeweils unabhängig voneinander, -CH₂CH₂-, -CH=CH-, -COO- oder eine Einfachbindung, 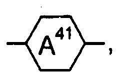 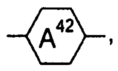 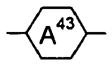 und 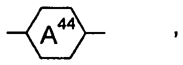 jeweils unabhängig voneinander, 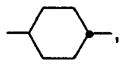 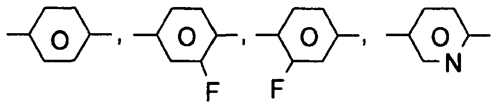 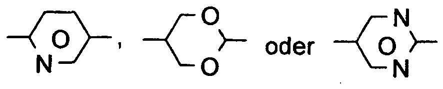 und
o 0 oder 1 und
p 0
enthält.

9. Elektrooptische Anzeige enthaltend ein Flüssigkristallmedium nach mindestens einem der Ansprüche 1 bis 8.

10. Anzeige nach Anspruch 9, **dadurch gekennzeichnet, dass** es sich um eine Aktivmatrixanzeige handelt.

11. Anzeige nach mindestens einem der Ansprüche 9 und 10, **dadurch gekennzeichnet, dass** es sich um eine ECB- oder um eine IPS-Anzeige handelt.

12. Verwendung eines Flüssigkristallmediums nach mindestens einem der Ansprüche 1 bis 8 in einer elektrooptischen Anzeige.

## Claims

1. Nematic liquid-crystal medium, **characterised in that** it comprises
a) a dielectrically negative, liquid-crystalline component (component A) which comprises one or more dielectrically negative compound(s) of the formula I 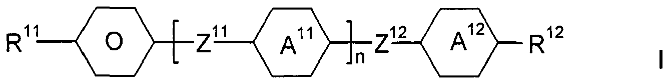 in which
R¹¹ and R¹² each, independently of one another, denote alkyl having 1 to 7 C atoms, alkoxy having 1 to 7 C atoms or alkoxyalkyl, alkenyl or alkenyloxy having 2 to 7 C atoms, 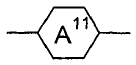 denotes 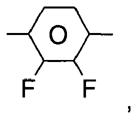 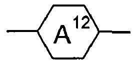 denotes 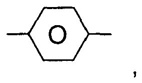
Z¹¹ and Z¹² denote a single bond and
n denotes 1,
and
b) a further dielectrically negative, liquid-crystalline component (component B) which is different from component A,
and **in that** it comprises one or more dielectrically negative compounds selected from the group of the compounds of the formulae I-1a and I-1a-i to I-1a-iii 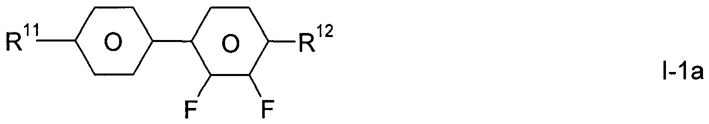 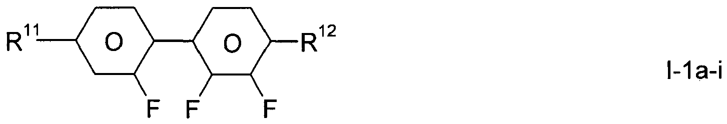 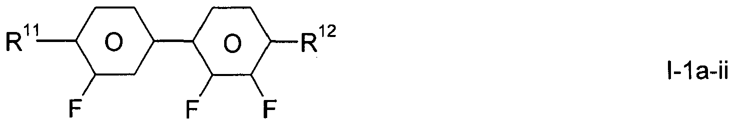 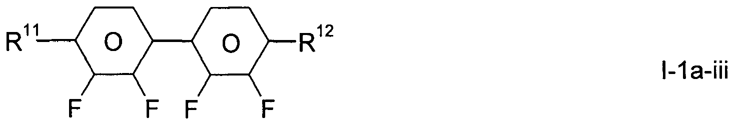 in which
R¹¹ and R¹² have the meaning given above.

2. Liquid-crystal medium according to Claim 1, **characterised in that** it comprises one or more dielectrically negative compounds of the formula I-1a

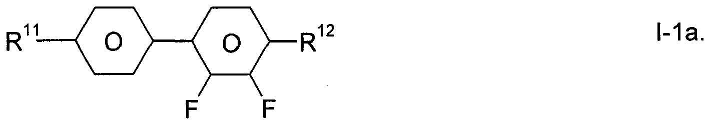

3. Liquid-crystal medium according to Claim 1 or 2, **characterised in that** it comprises
c) a dielectrically neutral, liquid-crystalline component (component C).

4. Liquid-crystal medium according to one or more of Claims 1 to 3, **characterised in that** it comprises
d) a dielectrically positive, liquid-crystalline component (component D).

5. Liquid-crystal medium according to one or more of Claims 1 to 4, **characterised in that** it comprises a component B which comprises one or more compounds selected from the group of the compounds of the formulae II and III 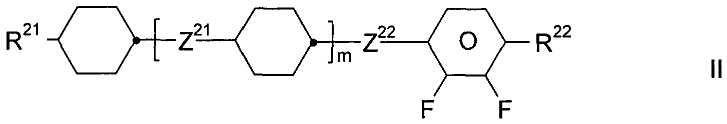 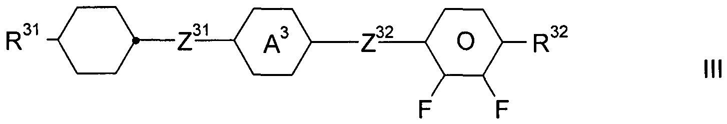 in which
R²¹ , R²², R³¹ and R³² each, independently of one another, denote alkyl or alkoxy having 1 to 7 C atoms or alkoxyalkyl, alkenyl or alkenyloxy having 2 to 7 C atoms,
Z²¹, Z²², Z³¹ and Z³² each, independently of one another, denote -CH₂-CH₂-, -CH=CH-, -C≡C-, -COO- or a single bond,
m denotes 0 or 1 and 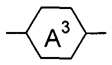 denotes

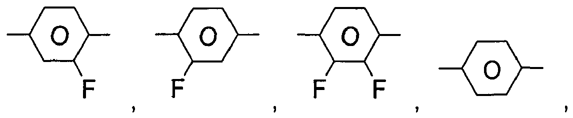

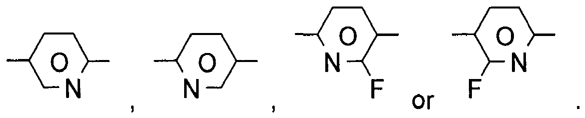

6. Liquid-crystal medium according to Claim 5, **characterised in that** it comprises one or more compounds of the formula II as given in Claim 5.

7. Liquid-crystal medium according to Claim 5 or 6, **characterised in that** it comprises one or more compounds of the formula III as given in Claim 6.

8. Liquid-crystal medium according to one or more of Claims 3 to 7, **characterised in that** the dielectrically neutral, liquid-crystalline component (component C) comprises one or more compounds selected from the group of the compounds of the formula IV 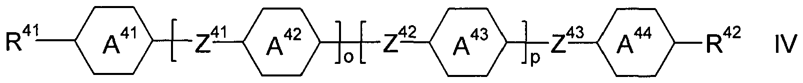 in which
R⁴¹ and R⁴² each, independently of one another, have the meaning given for R²¹ under formula II in Claim 5,
Z⁴¹, Z⁴² and Z⁴³ each, independently of one another, denote -CH₂CH₂-, -CH=CH-, -COO- or a single bond, 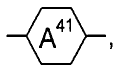 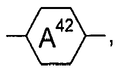 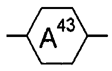 and 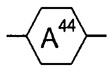 each, independently of one another, denote 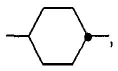 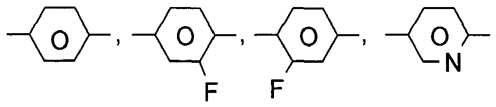 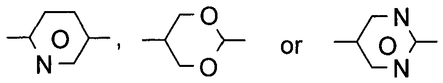 and
o denotes 0 or 1 and
p denotes 0.

9. Electro-optical display containing a liquid-crystal medium according to at least one of Claims 1 to 8.

10. Display according to Claim 9, **characterised in that** it is an active-matrix display.

11. Display according to at least one of Claims 9 and 10, **characterised in that** it is an ECB or IPS display.

12. Use of a liquid-crystal medium according to at least one of Claims 1 to 8 in an electro-optical display.

## Revendications

1. Milieu cristallin liquide nématique, **caractérisé en ce qu'**il comprend :
a) un composant cristallin liquide diélectriquement négatif (composant A) qui comprend un ou plusieurs composé(s) diélectriquement négatif(s) de la formule I 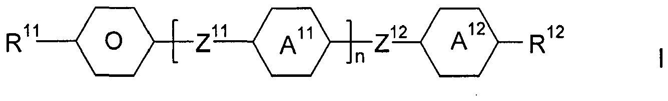 dans laquelle
R¹¹ et R¹² représentent, chacun indépendamment l'un de l'autre, alkyle comportant de 1 à 7 atomes de C, alcoxy comportant de 1 à 7 atomes de C ou alcoxyalkyle, alkényle ou alkényloxy comportant de 2 à 7 atomes de C, 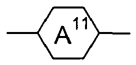 représente 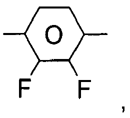 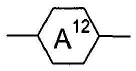 représente 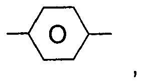
Z¹¹ et Z¹² représentent une liaison simple et
n représente 1,
et
b) un autre composant cristallin liquide diélectriquement négatif (composant B) qui est différent du composant A,
et **en ce qu'**il comprend un ou plusieurs composé(s) diélectriquement négatif(s) choisi(s) parmi le groupe des composés des formules I-1a et I-1a-i à I-1a-iii 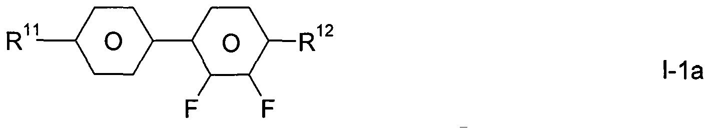 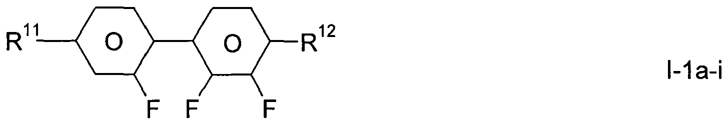 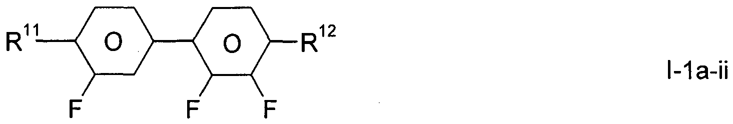 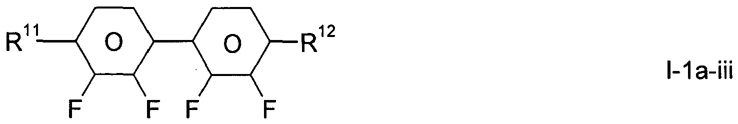 dans lesquelles
R¹¹ et R¹² présentent la signification donnée ci avant.

2. Milieu cristallin liquide selon la revendication 1, **caractérisé en ce qu'**il comprend un ou plusieurs composé(s) diélectriquement négatif(s) de la formule I-1a

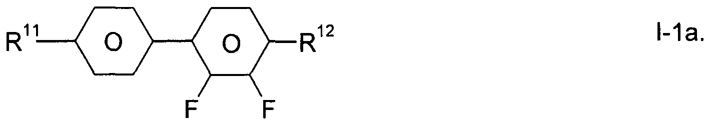

3. Milieu cristallin liquide selon la revendication 1 ou 2, **caractérisé en ce qu'**il comprend
c) un composant cristallin liquide diélectriquement neutre (composant C).

4. Milieu cristallin liquide selon une ou plusieurs des revendications 1 à 3, **caractérisé en ce qu'**il comprend
d) un composant cristallin liquide diélectriquement positif (composant D).

5. Milieu cristallin liquide selon une ou plusieurs des revendications 1 à 4, **caractérisé en ce qu'**il comprend un composant B qui comprend un ou plusieurs composé(s) choisi(s) parmi le groupe des composés des formules II et III 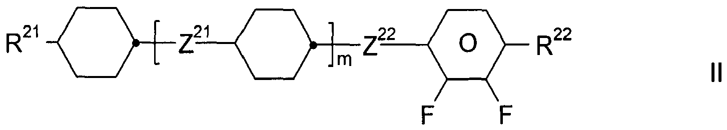 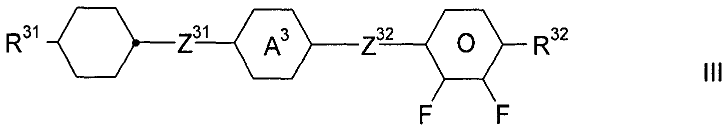 dans lesquelles
R²¹, R²², R³¹ et R³² représentent, chacun indépendamment des autres, alkyle ou alcoxy comportant de 1 à 7 atomes de C ou alcoxyalkyle, alkényle ou alkényloxy comportant de 2 à 7 atomes de C,
Z²¹ Z²², Z³¹ et Z³² représentent, chacun indépendamment des autres, -CH₂-CH₂-, -CH=CH-, -C≡C-, -COO- ou une liaison simple,
m représente 0 ou 1 et 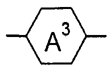 représente

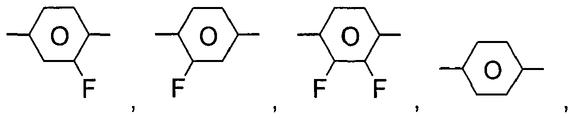

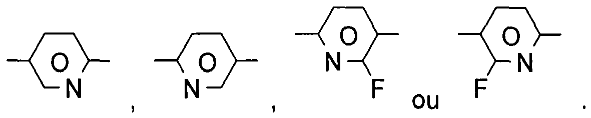

6. Milieu cristallin liquide selon la revendication 5, **caractérisé en ce qu'**il comprend un ou plusieurs composés de la formule II comme donné selon la revendication 5.

7. Milieu cristallin liquide selon la revendication 5 ou 6, **caractérisé en ce qu'**il comprend un ou plusieurs composés de la formule III comme donné selon la revendication 6.

8. Milieu cristallin liquide selon une ou plusieurs des revendications 3 à 7, **caractérisé en ce que** le composant cristallin liquide diélectriquement neutre (composant C) comprend un ou plusieurs composé(s) choisi(s) parmi le groupe des composés de la formule IV 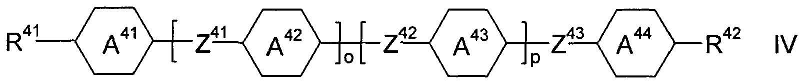 dans laquelle
R⁴¹ et R⁴² présentent, chacun indépendamment de l'autre, la signification donnée pour R²¹ sous la formule II selon la revendication 5,
Z⁴¹, Z⁴² et Z⁴³ représentent, chacun indépendamment des autres, -CH₂CH₂-, -CH=CH-, -COO- ou une liaison simple, 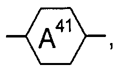 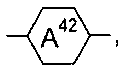 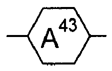 et 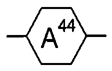 chacun indépendamment des autres, représentent 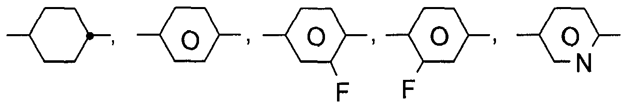 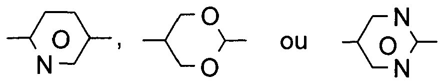 et
o représente 0 ou 1 et
p représente 0.

9. Affichage électro-optique contenant un milieu cristallin liquide selon au moins l'une des revendications 1 à 8.

10. Affichage selon la revendication 9, **caractérisé en ce qu'**il s'agit d'un affichage par matrice active.

11. Affichage selon au moins l'une des revendications 9 et 10, **caractérisé en ce qu'**il s'agit d'un affichage ECB ou IPS.

12. Utilisation d'un milieu cristallin liquide selon au moins l'une des revendications 1 à 8 dans un affichage électro-optique.
